## Europäisches Patentamt

## European Patent Office

## Office européen des brevets

(19)

(11) Veröffentlichungsnummer: **0 291 048 B1**

(12)

# EUROPÄISCHE PATENTSCHRIFT

(45) Veröffentlichungstag der Patentschrift: **29.01.92**

(51) Int. Cl.⁵: **B23B 31/26**

(21) Anmeldenummer: **88107617.8**

(22) Anmeldetag: **11.05.88**

Verbunden mit 88903848.5/0367766
(europäische
Anmeldenummer/Veröffentlichungsnummer)
durch Entscheidung vom 12.11.90.

(54) **Kupplungsvorrichtung zwischen einem Werkstück-oder Werkzeugträger und einer dafür vorgesehenen Handhabungseinrichtung.**

(30) Priorität: **11.05.87 DE 3715658**
**22.05.87 DE 3717270**
**02.02.88 DE 3803017**
**04.03.88 DE 3807140**

(43) Veröffentlichungstag der Anmeldung:
**17.11.88 Patentblatt 88/46**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**EP-A- 0 189 697**
**DE-A- 3 136 147**
**FR-A- 2 177 710**
**FR-A- 2 220 345**
**US-A- 4 135 848**

(73) Patentinhaber: **GOTTLIEB GÜHRING KG**
**Herderstrasse 50-54**
**W-7470 Albstadt 1-Ebingen(DE)**

(72) Erfinder: **Reinauer, Josef**
**Weidenweg 23**
**W-7480 Sigmaringen(DE)**
Erfinder: **Friedl, Franz**
**Egatweg 7**
**W-8952 Marktobersdorf(DE)**
Erfinder: **Effenberger, Wolfgang, Dr.**
**Zölchstrasse 2**
**W-8960 Kempten(DE)**

(74) Vertreter: **Winter, Konrad Theodor, Dipl.-Ing. et al**
**Rieder & Partner Patentanwälte Sendlinger Strasse 35**
**W-8000 München 2(DE)**

## Beschreibung

Die Erfindung bezieht sich auf eine Kupplungsvorrichtung zwischen einem Werkstück- oder Werkzeugträger, wie z.B. einem Werkzeugsystemmodul, beispielsweise in Form einer Werkzeug-Grundaufnahme, und einer zugehörigen Handhabungseinrichtung, wie z.B. einer Werkzeugmaschine, beispielsweise in der Ausgestaltung als Bohr-, Dreh- oder Fräsmaschine, gemäß dem Oberbegriff des Patentanspruchs 1. Die Kupplungsvorrichtung soll dabei sowohl für stehende als auch für bewegte, wie z.B. drehende Werkstück- oder Werkzeugträger, wie z.B Werkzeugsystemmodule geeignet sein.

Im Zuge der jüngeren technischen Entwicklung hin zu automatisierten Bearbeitungszentren entsteht das Bedürfnis nach modulartig aufgebauten Werkzeugsystemen, die bei geringstmöglichem Zeitaufwand auswechselbar sein müssen. Es sind bereits eine Reihe von Kupplungsvorrichtungen zwischen einzelnen Werkzeugsystemmodulen entwickelt und vorgeschlagen worden, die sich für stehende und auch für drehende Werkzeuge eignen. Man hat versucht, diese modularen Kupplungen auf die Schnittstelle zwischen Werkzeugmaschine und Werkzeugsystemmodul zu übertragen. Dabei hat sich jedoch gezeigt, daß es schwierig ist, die Kupplungsvorrichtung derart zu gestalten, daß sie den Anforderungen hinsichtlich Stabilität, Positionierungsgenauigkeit, Schmiermittelversorgung des Werkzeugs und Automatisierbarkeit des Werkzeugwechsels gleichermaßen gerecht wird.

So ist bereits aus der Zeitschrift "Moderne Fertigung" Heft November 1986, eine Kupplungsvorrichtung mit den wesentlichen Merkmalen des Oberbegriffs des Patentanspruchs 1 bekannt, bei dem ein mit der Betätigungsstange der Spannvorrichtung verbundener Konus zwei diametral zueinander versetzte Spannkörper radial nach außen in entsprechend geformte Ausnehmungen von radial von außen in die Spindelaufnahme geschraubten Schrauben drückt. Die Ausnehmungen in den Schrauben sind ebenso wie die damit in Eingriff kommenden Flächen der Spannkörper kegelförmig gestaltet, wobei ein gewisser Achsversatz zwischen dem Konus der Schraubenausnehmung und dem Konus des Spannkörpers vorgesehen ist, so daß beim radialen Nachaußendrücken der Spannkörper eine axial gerichtete Andruckkraft zwischen den zu kuppelnden Teilen erzeugt wird. Die Abstützung erfolgt hierbei über verhältnismäßig große Radial-Planflächen, wodurch sich eine verhältnismäßig hohe Steifigkeit des Systems ergibt. Allerdings können diese Planflächen nicht zur Gesamtheit zur Druckkraftübertragung genutzt werden, da normal zu diesen Planflächen ausgerichtete Mitnehmerstifte vorgesehen sein müssen, die für eine Indexierung des Werkzeugsystemmoduls bezüglich der Werkzeugmaschine bzw. für eine Mitnahme des Werkzeugsystemmoduls durch das werkzeugmaschinenseitige Kupplungsteil, wie z.B. die Spindel, sorgen. Um dem Problem entgegen zu treten, daß ein verhältnismäßig kühler Werkzeugsystemmodul an ein bereits vorgewärmtes werkzeugmaschinenseitiges Kupplungsteil zwängungsfrei angeschlossen werden kann, ist es von Vorteil, wenn der Werkzeugsystemmodul einen Eingriffsfortsatz und das werkzeugmaschinenseitige Kupplungsteil eine hierfür vorgesehene Aufnahme aufweist. Im bekannten Fall muß dieser Vorzug jedoch mit dem Nachteil erkauft werden, daß der Werkzeugsystemmodul mit einer verhältnismäßig komplexen Mechanik ausgestattet werden muß, die das Keilgetriebe, eine Betätigungsstange, und die beiden Spannkörper umfaßt.

Um diesen verhältnismäßig großen Aufwand zu vermeiden, ist bereits vorgeschlagen worden, dieses bekannte Kupplungssystem kinematisch umzukehren, d.h. die Spannelemente zusammen mit dem Betätigungsstange und dem Keilgetriebe auf seiten der Werkzeugmaschine unterzubringen. Dies führt jedoch im bekannten Fall dazu, daß nunmehr ein Zentrierzapfen am werkzeugmaschinenseitigen Teil der Kupplungsvorrichtung angebracht werden muß. Hierdurch muß jedoch auf seiten des Werkzeugsystemmoduls eine Innenfläche auf Präzision gefertigt werden, was zu relativ hohen Kosten führt. Darüber hinaus bedeutet diese Systemumkehr, daß beim Ansetzen eines Werkzeugsystemmoduls, der eine niedrigere Temperatur als die beispielsweise bereits vorgewärmte Werkzeugmaschinenspindel hat, Passungsprobleme auftreten können, wobei zu berücksichtigen ist, daß aus Gründen der Positionierungsgenauigkeit verhältnismäßig enge Toleranzen vorgesehen sein müssen.

Es hat sich darüber hinaus gezeigt, daß die Steifigkeit der Schnittstelle zwischen Werkzeug und Werkzeugmaschine dadurch begrenzt ist, daß das Biegewiderstandsmoment der Kupplungsvorrichtung im Bereich der Schnittstelle lediglich in der die Achsen der Spannkörper und der Schrauben enthaltenden Ebene definiert ist. Bei umlaufenden Lasten bedeutet dies, daß die Kupplungsvorrichtung nicht wirksam in der Lage ist, dem Aufbau von Werkzeugschwingungen entgegenzuwirken.

Aus dem Dokument EP-A-0189697 ist eine Kupplungsvorrichtung gemäß dem Oberbegriff des Patentanspruchs 1 bekannt geworden. Dabei sind die Spannelemente von einer Vielzahl von radial ausgerichteten Druckkörpern gebildet, die radial innen liegende Keilflächen aufweisen. Diese Keilflächen wirken mit einem Konus einer Schubstange zusammen, um die radial außen liegenden Funktionsflächen in Ausnehmungen des anzukuppelnden Teils zu drücken.

Über die Neigung der konischen Funktionsflächen auf Seiten des Schubkonus und der Spannelemente kann im bekannten Fall zwar eine Steuerung der Anpresskraft vorgenommen werden. Es hat sich jedoch gezeigt, daß diese bekannte Kupplungsvorrichtung nicht in der Lage ist, eine Verbindung zu schaffen, die über den Umfang gleichmäßig verteilt eine leicht steuerbare Steifigkeit aufweist. Das Einsatzgebiet dieser bekannten Kupplungsvorrichtung war damit relativ beschränkt, wobei sich zusätzlich als nachteilig erwiesen hat, daß der von der Kupplungseinrichtung eingenommene Bauraum in radialer Richtung verhältnismäßig groß ist.

Der Erfindung liegt deshalb die Aufgabe zugrunde, eine Kupplungsvorrichtung gemäß dem Oberbegriff des Patentanspruchs 1 zu schaffen, die den Anforderungen hinsichtlich Positionierungsgenauigkeit des Werkstück- oder Werkzeugträgers, wie z.B. des Werkzeugsystemmoduls, Steifigkeit der Verbindung, Automatisierbarkeit des Werkstück- oder Werkzeugwechsels, Flexibilität hinsichtlich der Anwendungsgebiete und Wirtschaftlichkeit in verbessertem Maße gerecht wird.

Diese Aufgabe wird durch die im kennzeichnenden Teil des Patentanspruchs 1 angegebenen Merkmale gelöst.

Erfindungsgemäß gelingt es durch die Schaffung einer klammerartigen Verspannung zwischen den zu kuppelnden Teilen, den Kraftfluß zwischen den Kupplungsteilen zu verbessern, d.h. über den Umfang der Schnittstelle zwischen dem Werkzeugsystemmodul und Werkzeugmaschine möglichst gleichmäßig zu halten. Durch die homogene Kraftverteilung über den Umfang wird in Verbindung mit der erfindungsgemäßen Gestaltung der Spannklauen in Form von im wesentlichen axial ausgerichteten klammerartigen Elementen der in radialer Richtung benötigte Bauraum für die Spannklauen sehr klein, wodurch sich die Möglichkeit eröffnet, die in Flächenkontakt miteinander stehenden Planflächen der zu koppelnden Teile sehr groß zu gestalten. Weil darüber hinaus durch die erfindungsgemäße Gestaltung der Kupplungsvorrichtung kein bewegtes Teil in Achsnähe erforderlich ist, ergibt sich eine Kompatibilität mit verschiedensten Werkzeugsystemen, beispielsweise auch b solchen, bei denen eine modulare Kopplung mit axialer Anzugsschraube aufgebaut wird. Dabei ist nach wie vor dafür gesorgt, daß temperaturbedingte Schwierigkeiten beim Wechsel des Werkzeugsystemmoduls vom Grundkonzept her ausgeschlossen sind, da der gegebenenfalls kältere Werkzeugsystemmodul mit einem Fortsatz in eine Aufnahme eingreift. Die relativ aufwendigere Passungsinnenfläche ist dabei im Bereich des werkzeugmaschinenseitigen Teils ausgebildet, wodurch die Kosten des Werkzeugsystemmoduls reduziert werden. Dabei ergibt sich der besondere Vorteil, daß im Werkzeugsystemmodul keine bewegten Teile mehr vorhanden sind, wodurch die Herstellungskosten erheblich reduziert werden können.

Die vorstehend beschriebenen Vorteile ergeben sich für jede Art einer Kupplung zwischen einem Werkstück- oder Werkzeugträger und einer Handhabungseinrichtung, die beispielsweise von einem Werkstückwechselsystem gebildet sein kann.

Der erfindungsgemäße Aufbau der Kupplungsvorrichtung hat insbesondere dann Vorteile, wenn er im Bereich der Schnittstelle zwischen einer Werkzeugmaschinenspindel und einer Werkzeug-Grundaufnahme gemäß Patentanspruch 2 Anwendung findet. In diesem Falle ergibt sich ein äußerst einfacher Spindelaufbau, da alle Teile rotationssymmetrische gestaltet werden können. Ein zusätzlicher Vorteil ist dabei darin zu sehen, daß Spindeln von bereits im Handel befindlichen Werkzeugmaschinen mit geringem Aufwand auf das erfindungsgemäße Kupplungssystem umrüstbar sind, wobei die in der Spindel bereits vorgesehene Zugstange weiter verwendet werden kann und lediglich ein Spindelvorsatzflansch ausgebildet werden muß, der die Spannklauen aufnimmt. Dabei ist nach wie vor der Aushubweg zum Lösen der Kupplungsvorrichtung erheblich gegenüber einem herkömmlichen Kupplungssystem mit Steilkegel reduziert. Da auf seiten des Werkzeugsystemmoduls lediglich eine Planfläche und ein Zentrierfortsatz ausgebildet werden muß, ist es auch möglich, baugleiche, genormte Greiferrillen für einen automatischen Werkzeugwechsel vorzusehen, wodurch sich zusätzliche wirtschaftliche Vorteile ergeben, wobei die Vorteile der Zylinderpassung hinsichtlich der Positionierungsgenauigkeit nach wie vor erhalten bleiben.

Die rotationssymmetrische Gestaltung der Kupplungsvorrichtung eröffnet darüber hinaus in vorteilhafter Weise die Möglichkeit, die Anpreßkraft querkraftfrei zu übertragen und dadurch die Positionierungsgenauigkeit und letztlich auch die Stabilität des Werkzeugs anzuheben. Die klammerartigen Spannklauen schmiegen sich unter Einwirkung des Keilgetriebes äußerst gleichmäßig an eine Flanke in der nutartigen Ausnehmung des Zentrierfortsatzes an, wobei durch geeignete Gestaltung der in Kontakt stehenden Flächen des Keilgetriebes, wie z.B. durch die Weiterbildung gemäß Patentanspruch 4, eine möglichst verlustfreie Einleitung der Klemmkraft erfolgen kann. Dabei ist von weiterem Vorteil, daß die durch das Nachaußendrücken der Spannklauen hervorgerufene kleine elastische Verformung des Zentrierfortsatzes die Tendenz hat, die Passung zwischen Spindel und Werkzeugsystemmodul exakter auszubilden, d.h. zu verbessern.

Die querkraftfreie Erzeugung der axialen Anpreßkraft wird durch die Weiterbildung gemäß Patentanspruch 6 zusätzlich verbessert. Auf diese Weise wird eine schwimmende Lagerung der Betätigungsstange geschaffen, wodurch der Schubkonus beim Einleiten der Kraft eine Selbstzentrierung radial innerhalb der Spannklauen erfährt. Die Spannklauen selbst stützen sich mit ihrem dem Klauenabschnitt abgewandten Ende in radial definierter Position ind er Aufnahme ab, so daß ein zwängungsfrei arbeitendes Getriebe geschaffen wird, mit dem die Anpreßkraft über den Umfang äußerst gleichmäßig erzeugt werden kann.

Wenn der Schubkonus radial innerhalb der Klauenabschnitte angeordnet ist, ergibt sich eine unmittelbare Einleitung der Konuskraft auf die Klauenabschnitte, wobei durch die Keilflächen des Keilgetriebes eine Kraftübersetzung erfolgt. Eine weitere Kraftübersetzungsstufe wird erfindungsgemäß durch das Einschwenken der Klauenabschnitte in die nutartige Ausnehmung im Zentrierfortsatz erzeugt, so daß sehr hohe axiale Spannkräfte aufgebracht werden können. Die erfindungsgemäße Kupplungsvorrichtung eignet sich demgemäß für den Einsatz an Schnittstellen nahezu aller Werkzeugmaschinentypen.

Grundsätzlich ist es möglich, die Spannklauen an irgeneiner Stelle in der Zentrieraufnahme einer Spindel derart festzulegen, daß sie unter Beibehaltung einer vorbestimmten radialen Position in und außer Eingriff mit der nutartigen Ausnehmung des Zentrierfortsatzes gebracht werden können. Besonders vorteilhaft ist jedch die Weiterbildung gemäß Patentanspruch 7, gemäß der eine für die Spannklauen vorgesehene Stütznut in einem Mitnahmering ausgebildet ist, der in der Zentrieraufnahme eingesetzt ist.

Der durch die Weiterbildung gemäß Patentanspruch 2 erzielte Vorteil, unter Zuhilfenahme zumindest einer Mitnehmerklaue, die in der Stirnseite des Zentrierzylinders in eine Ausnehmung eingreift, die bei der Drehmomentübertragung auftretenden Kräfte definiert einzuleiten und dabei die Kontakt-Planflächen zwischen den zu kuppelnden Teilen unverletzt zu lassen, wird durch die Weiterbildung gemäß Patentanspruch 8 aufrechterhalten. Darüber hinaus ergibt sich der fertigungstechnische Vorteil, daß die für die Schwenkbewegung der Spannklauen und die für die Umfangskraftübertragung vorgesehenen Funktionsflächen nunmehr an einem einzigen Bauteil ausgebildet und deshalb mit größerer Präzisiton hinsichtlich der Lagezuordnung zueinander gefertigt werden können.

Wie eingangs bereits erwähnt, eröffnet die erfindungsgemäße Gestaltung der Kupplungsvorrichtung einen reinen rotationssymmetrischen Aufbau, der in Achsnähe keine Bauteile benötigt. Dadurch wird in vorteilhafter Weise die Möglichkeit eröffnet, den Werkzeugsystemmodul über achsmittige Versorgungskanäle mit Kühl- bzw. Schmiermittel für das Werkzeug zu versorgen. Hierzu ist lediglich erforderlich, daß die Betätigungsstange eine Längsbohrung für Schmiermittel erhält. Dieses Schmiermittel wird dann im Inneren des Schubkonus weitergeleitet und über einen Hohlzapfen gemäß Patentanspruch 9 einer koaxialen Ausnehmung im Werkzeugsystemmodul zugeführt.

In diesem Zusammenhang ist es möglich, im Schubkonus eine axiale zentrische Bohrung vorzusehen, in die beim Kupplungsvorgang abdichtend ein koaxial im Werkzeugsystemmodul befestigter Hohlzapfen eingreifen kann. Auf diese Weise kann die Schmiermittelzufuhr ohne radiale Umlenkungen weiterhin erfolgen, es wird jedoch zusätzlich dafür gesorgt, daß die Aushubbewegung beim Lösen der Kupplungsvorrichtung auf das axiale Längenmaß des Zentrierzylinders beschränkt bleibt.

Eine besonders vorteilhafte Gestaltung der nutartigen Ausnehmung im Zentrierfortsatz bzw. Zentrierzylinder ergibt sich als Ringnut mit V-Querschnitt, da diese Nut im Einstichverfahren hergestellt werden kann.

Der erfindungsgemäße Aufbau der Kupplungsvorrichtung eröffnet die Möglichkeit, die Funktionsflächen zwischen Spannklauen, Aufnahme- und Zentrierzylinder derart zu gestalten, daß möglichst großfläche Kontaktbereiche entstehen. Dies kann zuverlässig dadurch sichergestellt werden, daß die Spannklauen durch radiales Zertrennen eines hülsenförmigen Körpers (78) hergestellt sind, der an seinen Stirnseiten radial nach außen vorstehende Ringwulste (26, 30) ausbildet.

Wenn ein Zentrierring gemäß Patentanspruch 10 vorgesehen ist, kann der Rundlauf zusätzlich einstellbar gemacht werden, wodurch sich die Positionierungsgenauigkeit des Werkzeugsystemmoduls weiter anheben läßt.

Bei der erfindungsgemäßen Kupplungsvorrichtung eine eine homogene Kraftverteilung über den Umfang und eine exakte Lagepositionierung der zu kuppelnden Teile zueinander vom Zustand der in Passungseingriff miteinander bringbaren Funktionsflächen der zu kuppelnden Teile abhängig. Es ist deshalb von Vorteil, diese Funktionsflächen im Einsatz der Kupplungsvorrichtung selbst unter rauhen Bedingungen, d.h. im Einsatz mit größten Zerspannungsleistungen und auch bei ungünstiger Spanbildung, sauber und den hierfür erforderlichen vorrichtungstechnischen Aufwand so klein wie möglich zu halten. Diesem Bedürfnis wird durch die Weiterbildung des Patentanspruchs 11 Rechnung getragen. Die Funktionsflächen der in Eingriff bringbaren Teile der Kupplungsvorrichtung werden im gelösten Zustand der Kupplung vorzugsweise kontinuierlich mit Druckluft gespült, so daß sich Schmutz, Schleifstaub und dergleichen nicht an den Passungsflächen festsetzen kann. Beschädigungen der Passungsflächen können deshalb wirksam ausgeschlossen werden, so daß die Lebensdauer der Kupplungsvorrichtung zusätzlich angehoben wird.

Bei rotationssymmetrischem Aufbau der Kupplungsvorrichtung ergibt sich eine einfache Versorgung des Spülkanalsystems mit Druckluft. Um den Planflächenkontakt zwischen Werkzeugsystemmodul und Spindel wirksam zu reinigen, ist die Weiterbildung gemäß Patentanspruch 12 von besonderem Vorteil. Die Druckluft-Spülkanäle in den Radialringflächensegmenten sorgen dafür, daß bei Annäherung des Werkzeugsystemmoduls im Bereich der Passungsflächen eine immer stärker beschleunigte Druckluftströmung zwischen den aufeinander zu bewegten Passungsflächen erzeugt wird, wodurch selbst feinster Schleifstaub zuverlässig von der Passungsfläche entfernt wird. Die Nuten zwischen den Radialringflächensegmenten wirken dabei zusätzlich als Schmutzkammern, so daß eine Sauerhaltung dieser Passungsflächen zusätzlich vereinfacht wird.

Herstellungstechnisch von Vorteil ist es, die Stütznut in einem in der Zentrieraufnahme eingesetzten, die Umfangskräfte auf das Werkzeugsystemmodul übertragenden Mitnahmering auszubilden bzw. die Zentrieraufnahme über eine Radialschulter in eine Vertiefung übergehen zu lassen, in die zur Schaffung einer drehfesten Verbindung zwischen Werkzeugmaschinenspindel und Mitnahmering ein entsprechend gestalteter Mitnahmefortsatz des Mitnahmerings formschlüssig eingreift, da auf diese Weise lediglich eine axiale Bearbeitung des werkzeugmaschinenseitigen Teils, beispielsweise der Werkzeugmaschinenspindel, erfolgen muß.

Es hat sich gezeigt, daß durch die prismenartige Gestaltung des Mitnahmefortsatzes am Mitnahmering sehr große Umfangskräfte übertragen werden können, wobei der wirksame Durchmesser des Mitnahmefortsatzes verhältnismäßig begrenzt bleiben kann. Für die Gestaltung des Mitnahmefortsatzes kann grundsätzlich jeder regelmäßige Polygonquerschnitt als Basis dienen. Es hat sich jedoch gezeigt, daß auf der Basis eines Dreikantprismas mit rundgeschliffenen Kanten und konvex gewölbten Prismenflächen gute Ergebnisse erzielt werden können. Es ergibt sich auf diese Weise eine Formschlußverbindung in Form eines sog. K-Profils, wobei allerdings die dort zwischen den Kantenrundungen vorgesehenen ebenen Flächen durch konvexe Flächen ersetzt sind.

Wenn der Mitnahmering zwei diametral angeordnete Mitnehmerklauen trägt, deren Symmetrieebene mit einer der drei Axialebene durch die Kanten des Mitnahmefortsatzes einen Winkel von 30° einschließt, so gelingt es nicht nur, die bei der Drehmomentübertragung auftretenden Umfangskräfte symmetrisch zu übertragen, sondern es wird darüber hinaus die Voraussetzung dafür geschaffen, daß eine Indexdierung des Werkzeugsystemmoduls relativ zur Werkzeugmaschine in Teilschritten von 30° erfolgen kann.

Zur zusätzlichen Stabilisierung der Spannklauen ist die Weiterbildung gemäß Patentanspruch 13 von Vorteil. In der vorzugsweisen Weiterbildung wird dem Führungszylinder gleichzeitig die Funktion übertragen, den Mitnahmering definiert in der Zentrieraufnahme zu fixieren, wodurch die Anzahl der Bauelemente reduziert werden kann.

Mit der Weiterbildung gemäß Patentanspruch 14 wird durch die erfindungsgemäße Gestaltung des mit Druckluft versorgbaren Ringraums die zur Verfügung stehende Druckluft mit geringen Verlusten zu den wichtigen Punkten geleitet, die es sauber zu halten bzw. zu reinigen gilt. Diese Weiterbildung ist insbesondere dann von Vorteil, wenn der Führungskörper im Bereich des Gewindes zumindest eine im wesentlichen in Axialrichtung verlaufende Kerbe zur Versorgung des Ringraums mit Druckluft hat, da es auf diese Weise gelingt, die durch die Stichkanäle strömende Druckluft vom Massendurchsatz her so groß zu halten, daß nicht nur die Planfläche, sondern auch die zylindrische Passungsinnenfläche gespült bzw. gesäubert werden kann.

Die ist auch herstellungstechnisch von Vorteil, da die Kerbe im Bereich des Gewindes sehr einfach herstellbar ist.

Mit der Weiterbildung gemäß Patentanspruch 15 wird mit einfachen Mitteln dafür gesorgt, daß auch ein gezielter Druckluftstrom zu den Funktionsflächen zwischen Schubkonus und Spannklauen geleitet wird.

Die Gestaltung des Führungszylinders gemäß Patentanspruch 16 schafft in einfacher Weise die Voraussetzung für die oben erwähnte schwimmende Lagerung der Betätigungsstange im Bereich des Keilgetriebes, wodurch der Selbstzentrierungseffekt realisiert wird, dabei aber gleichzeitig der Kupplungsvorgang selbst nicht erschwert wird, da der elastische Dichtring für eine ausreichende Vorzentrierung der Kupplungsteile sorgt.

Wenn die Druckluft-Spülkanäle im Zentrierring ausgebildet werden, ergibt sich eine sehr kostengünstige Bereitstellung des Spülkanalsystems, da die Druckluft-Spülkanäle in einem gesonderten Bauteil untergebracht werden können. Dabei ergibt sich der zusätzliche Vorteil, daß durch den Einsatz des Zentrierrings, der zu seiner statisch bestimmten Halterung in der Spindel lediglich an einer Planfläche und an einer zylindrischen Passungsfläche mit der Spindel in Kontakt steht, zwangsläufig ein Ringraum auf der rückwärtigen Seite des Zentrierrings entsteht, über den die Druckluft gleichmäßig auf die einzelnen Spülkanäle verteilt werden kann. Die Weiterbildung gemäß Patentanspruch 10 ist insbesondere dann von zusätzlichem Vorteil, wenn die jeweiligen Längsnuten im Mitnahmering radial innerhalb des Ringraums auslaufen und in einen zur zylindrischen Passungsfläche hin offenen, vorzugsweise umlaufenden Ringspalt übergehen. Der Ringspalt zur Reinigung der zylindrischen Passungsfläche zwischen Spindel und Werkzeugsystemmodul kann auf diese Weise einfach dadurch erzeugt werden, daß eine geeignete Durchmesserabstimmung des Mitnahmerings und des Zentrierrings erfolgt.

Wenn die zumindest eine Längskerbe und der Zwischenraum zwischen Zugstange und Führungskörper von einem gemeinsamen Druckluft-Versorgungsraum ausgehen, der über einen Ringkanal zwischen Zugstange und Spindel mit Druckluft versorgt ist, so ergibt sich eine einfache Fluidversorgung.

Wenn die Klauenabschnitte an den Außenseiten zum Werkzeugsystemmodul hin abfallende Keilflanken haben, so kann der Aufbau der Kupplungsvorrichtung zusätzlich vereinfacht werden. Die zum Werkzeugsystemmodul hin abfallende Keilflanke bewirkt, daß der Zentrierzylinder beim Einführen in die Werkzeugmaschinenausnehmung die Klauenabschnitte radial nach innen verdrängt.

Ein zusätzlicher Vorteil der vorstehend beschriebenen Kupplungsvorrichtung ist noch darin zu sehen, daß es mit einer einzigen Schnittstelle gelingt, Durchmesserreduzierungen, d.h. Übergänge von einem verhältnismäßig großen Spindeldurchmesser auf einen verhältnismäßig kleinen Durchmesser des Werkzeugsystemmoduls, ohne Vergrößerung der axialen Baulänge vorzunehmen. Zu diesem Zweck ist es lediglich erforderlich, in die Zentrieraufnahme einen entsprechend gestalteten Reduzierring einzusetzen und dementsprechend radial nach innen gekröpfte Spannklauen vorzusehen, die dann mit einem gegebenenfalls etwas modifizierten Schubkonus in Funktionseingriff bringbar sind.

Es hat sich gezeigt, daß besonders gute Ergebnisse mit sechs oder acht Spannklauen erzielbar sind.

Mit der Weiterbildung gemäß Patentanspruch 18 wird der vorrichtungstechnische Aufwand verringert.

Wenn die Stütznut von einer Werkzeugmaschinenspindel mit Vorsatzflansch definiert ist, eröffnet sich die Möglichkeit, die besonders hoch beanspruchten Bereiche der Stütznut im Vorsatzflansch auszubilden, der abnehmbar am werkzeugmaschinenseitigen Kupplungsteil, beispielsweise an der Werkzeugmaschinen-Spindel befestigt ist. Der Vorsatzflansch kann - ebenso wie der vorstehend angesprochene Zentrierring - entweder insgesamt aus verschleißfestem Material ausgebildet sein oder aber Einsätze aus derartigem Material aufweisen, um die Standzeit anzuheben.

Vorteilhafte Varianten zur Gestaltung der Mitnahme in Umfangsrichtung zwischen den zu koppelnden Teilen der Kupplungsvorrichtung ergeben sich dann, wenn zur Mitnahme zwischen den zu kuppelnden Teilen zumindest zwei, vorzugsweise diametral gegenüberliegende Mitnehmerklauen vorgesehen sind, die in Passungs-Funktionseingriff mit entsprechend ausgebildeten Ausnehmungen im jeweils anderen Kupplungsteil bringbar sind.

Um das Ansetzen des Werkzeugsystemmoduls zu erleichtern, eine Vorzentrierungseinrichtung für das anzukoppelnde Teil des Werkzeugsystemmoduls bereitzustellen. Eine einfache Form der Vorzentrierung ist Gegenstand des Patentanspruchs 19.

Wenn die Vorzentrierungseinrichtung ein Paar von in Axialabstand stehenden Außenflächen eines mit der Betätigungsstange verbundenen Konusteils aufweist, wobei die dem Werkzeugsystemmodul abgewandte Außenfläche ausschließlich dann in Passungseingriff mit einer Innenausnehmung der Werkzeugmaschinen-Spindel bringbar ist, wenn die Betätigungsstange eine die Kupplung lösende Stellung einnimmt, und wobei die andere, die Zentrierhilfe bildende Außenfläche während des Spannvorgangs außer Eingriff mit einer Innenzylinderfläche des Werkzeugsystemmoduls bleibt, so gelingt es, beim Zusammenfahren der zu koppelnden Teile, d.h. im ausgefahrenen Zustand der Betätigungsstange, letztere zur Vorzentrierung des anzukoppelnden Teils heranzuziehen. Durch geeignete Gestaltung der Gegenflächen, die auf den Hub der Betätigungsstange abgestimmt ist, wird dafür gesorgt, daß die Betätigungsstange zusammen mit dem Schubkonus beim Spannvorgang keine radiale Führung mehr hat, so daß sich der Schubkonus im Zusammenwirken mit den Spannklauen während des Spannvorgangs selbst zentrieren kann.

Die Weiterbildung gemäß Patentanspruch 20 führt zu einer weiteren Vereinfachung des Aufbaus der Kupplungsvorrichtung, indem der Kopplungsansatz des Schubkonus zur seitlichen Stabilisierung der Spannklauen herangezogen wird.

Die Ausbildung der Radialschlitze in einem Druckkörper, der über eine Federeinrichtung gegen eine Steuerfläche der Spannklauen drückt, um deren Klauenabschnitte im gelösten Zustand der Kupplungsvorrichtung aus der nutartigen Ausnehmung zu schwenken, ermöglicht es, den Flankenwinkel in der nutförmigen Ausnehmung einerseits und die damit zusammenwirkenden Klauenabschnitte zur Mittelachse der Kupplungsvorrichtung steiler auszubilden.

Ähnliche Vorzüge ergeben sich mit der Weiterbildung gemäß der letzten Alternative des Patentanspruchs 20.

Weitere vorteilhafte Ausgestaltungen der Erfindung sind Gegenstand der übrigen Unteransprüche.

Nachstehend werden anhand schematischer Zeichnungen mehrere Ausführungsbeispiele der Erfindung näher erläutert. Es zeigen:

Fig. 1 einen Axialschnitt einer ersten Ausführungsform der Kupplungsvorrichtung;

Fig. 2A eine Stirnansicht des Werkzeugsystemmoduls in der Ausgestaltung einer Werkzeug-Grundaufnahme;

Fig. 2B eine teilweise im Schnitt gezeigte Seitenansicht der Werkzeug-Grundaufnahme;

Fig. 3A eine Schnittdarstellung des der Werkzeug-Grundaufnahme zugewandten Endabschnitts einer Werkzeugmaschinenspindel;

Fig. 3B eine Stirnansicht der Werkzeugmaschinenspindel gemäß "IIIB" in Fig. 3A;

Fig. 4A eine teilweise im Axialschnitt gezeigte Ansicht eines Mitnahmerings;

Fig. 4B eine Ansicht des Mitnahmerings gemäß "IVB" in Fig. 4A;

Fig. 4C eine Ansicht des Mitnahmerings gemäß Fig. 4A gemäß "IVC" in Fig 4A;

Fig. 5A im oberen Teil einen Längsschnitt einer Spannklaue und im unteren Teil eine Seitenansicht eines Hülsenkörpers, aus dem die Spannklaue herstellbar ist;

Fig. 5B im oberen Teil Stirnansichten von drei in gleichmäßigem Umfangsabstand zueinander liegenden Spannklauen und im unteren Abschnitt eine Stirnansicht des in Fig. 5A gezeigten hülsenförmigen Körpers;

Fig. 6A einen Längsschnitt eines Führungszylinders;

Fig. 6B eine Ansicht des Führungszylinders gemäß "VIB" in Fig. 6A;

Fig. 7 einen Längsschnitt des Schubkonus gemäß Fig. 1;

Fig. 8 eine Seitenansicht des Hohlzapfens gemäß Fig. 1;

Fig. 9 eine Zusammenstellung der in den Fig. 2 bis 8 gezeigten Einzelelemente zur Verdeutlichung des Montagevorgangs;

Fig. 10 eine teilweise im Schnitt gezeigte Seitenansicht der Kupplungsvorrichtung zu Beginn des Ankupplungsvorganges;

Fig. 11 eine der Fig. 10 ähnliche Ansicht der Kupplungsvorrichtung, wobei der Zentrierzylinder in die Werkzeugmaschinenaufnahme gerade eingeführt wird;

Fig. 12 eine der Fig. 11 ähnliche Seitenansicht der Kupplungsvorrichtung bei vollständig eingeführtem Zentrierzylinder; und

Fig. 13 eine der Fig. 1 entsprechende Ansicht einer abgewandelten Ausführungsform der Kupplungsvorrichtung.

Fig. 14 einen Axialschnitt einer weiteren Ausführungsform der Kupplungsvorrichtung im gelösten Zustand;

Fig. 15 eine Stirnansicht des der Werkzeug-Grundaufnahme zugewandten Endabschnitts einer Werkzeugmaschinenspindel gemäß II in Fig. 14;

Fig. 16 eine Stirnansicht des Werkzeugsystemmoduls in der Ausgestaltung einer Werkzeug-Grundaufnahme gemäß XVI in Fig. 14;

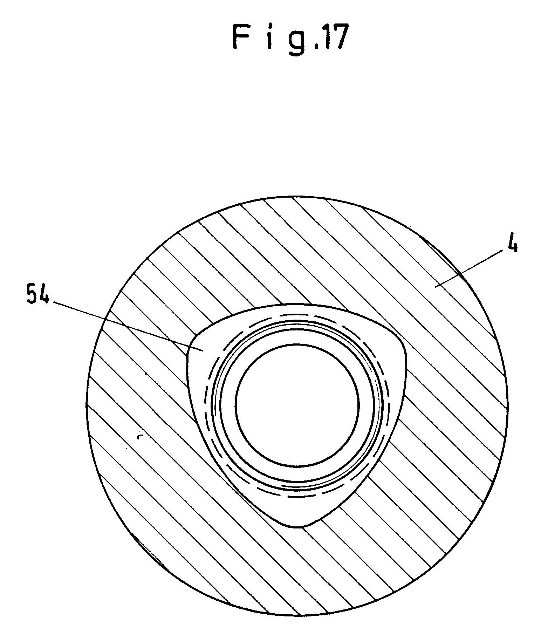

Fig. 17 einen Schnitt gemäß XVII-XVII in Fig. 14;

Fig. 18A eine teilweise im Axialschnitt gezeigte Ansicht eines Mitnahmerings;

Fig. 18B eine Ansicht des Mitnahmerings gemäß "XVIII B" in Fig. 18A;

Fig. 18C eine Ansicht des Mitnahmerings gemäß "XVIIIC" in Fig. 18A;

Fig. 19A einen Axial-Halbschnitt einer weiteren Ausführungsform der Kupplungsvorrichtung bei einer Schnittführung gemäß XIXA-XIXA in Fig. 19B;

Fig. 19B einen Radialschnitt gemäß XIXB-XIXB in Fig. 19A;

Fig. 19C den Halbschnitt XIXC in Fig. 19B;

Fig. 19D den Halbschnitt XIXD gemäß Fig. 19B;

Fig. 20A eine der Fig. 19A ähnliche Halbschnittansicht einer weiteren Ausführungsform der Kupplungsvorrichtung gemäß XXA in Fig. 20B;

Fig 20B eine Stirnansicht gemäß XXB des werkzeugmaschinenseitigen Kupplungsteils der Ausführungsform gemäß Fig. 20A;

Fig. 20C einen Halbschnitt gemäß XXC in Fig. 20B;

Fig. 21A einen Halbschnitt einer weiteren Ausführungsform eines werkzeugmaschinenseitigen Kupplungsteils der Kupplungsvorrichtung bei einer Schnittführung gemäß XXIA in Fig. 21B;

Fig. 21B eine Stirnansicht des Kupplungsteils gemäß Fig. 21A;

Fig. 21C einen Halbschnitt gemäß XXIC in Fig. 21B; Fig 22A einen Radial-Halbschnitt einer weiteren Ausführungsform der Kupplungsvorrichtung;

Fig. 22B eine Teilansicht des Stirnabschnitts des in Fig. 22A gezeigten Werkzeugsystemmoduls;

Fig. 23 einen Axial-Halbschnitt einer weiteren Ausführungsform der Kupplungsvorrichtung;

Fig. 24A und 24B Axial-Halbschnitte zweier weiterer Ausführungsformen der Kupplungsvorrichtung;

Fig. 25A einen Axial-Halbschnitt einer weiteren abgewandelten Ausführungsform der Kupplungsvorrichtung mit Vorsatzflansch;

Fig. 25B eine Teilansicht gemäß XXVB in Fig. 25A;

Fig. 26A und 26B der Fig 25 ähnliche Ansichten einer weiteren Ausführungsform der Kupplungsvorrichtung; und

Fig. 27A und 27B Axialschnitte einer letzten Ausführungsform der Kupplungsvorrichtung, wobei in Fig. 27A die gelöste und in Fig. 27B die verriegelte Stellung der Kupplungsvorrichtung gezeigt ist.

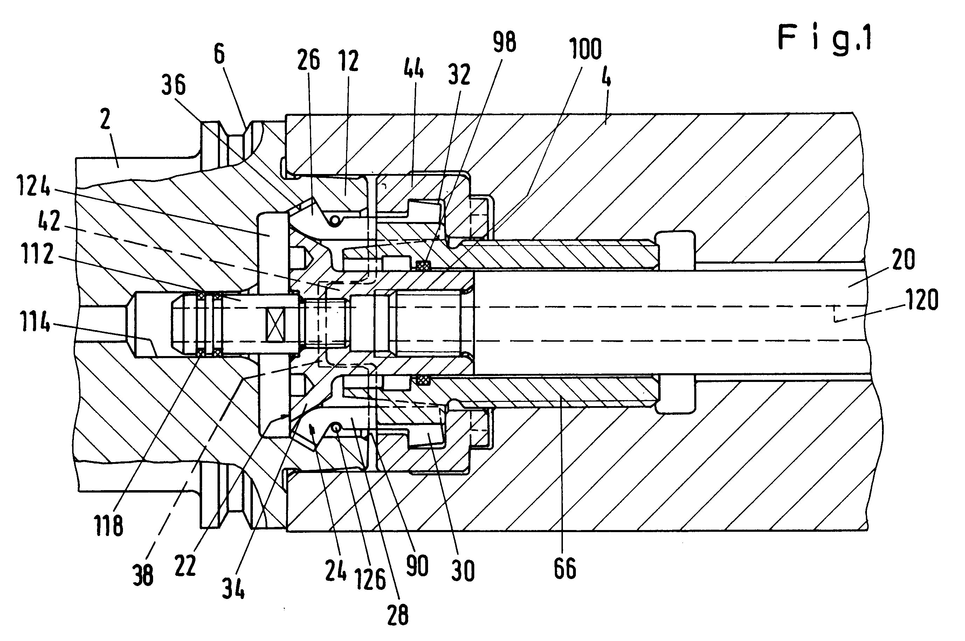

In Fig. 1 ist mit dem Bezugszeichen 2 ein Werkzeugsystemmodul, wie z.B. eine Werkzeug-Grundaufnahme und mit dem Bezugszeichen 4 eine Werkzeugmaschinenspindel bezeichnet, wie z.B. die Spindel einer Schleifmaschine. Die nachfolgend näher zu beschreibende Kupplungsvorrichtung betrifft die Schnittstelle zwischen diesen beiden Komponenten, von denen die eine irgendeinen Werkzeugsystemmodul und die andere einen diesen tragenden Teil einer Werkzeugmaschine darstellt.

Zur Ermöglichung eines automatischen Wechsels des Werkzeugsystemmoduls weist dieser eine Greiferrille 6 auf, die in herkömmlicher Weise ausgebildet sein kann. Die nachfolgend näher zu beschreibende Kupplungsvorrichtung muß in der Lage sein, die Komponenten in vorbestimmter radialer und axialer Positionierung fest gegeneinander zu drücken. Als weiteres wesentliches Kriterium ist eine leichte Lösbarkeit der Kupplung unter Verwirklichung möglichst kleiner Aushubwege zu beachten. Zu diesem Zweck besitzt die Kupplungsvorrichtung den folgenden Aufbau:

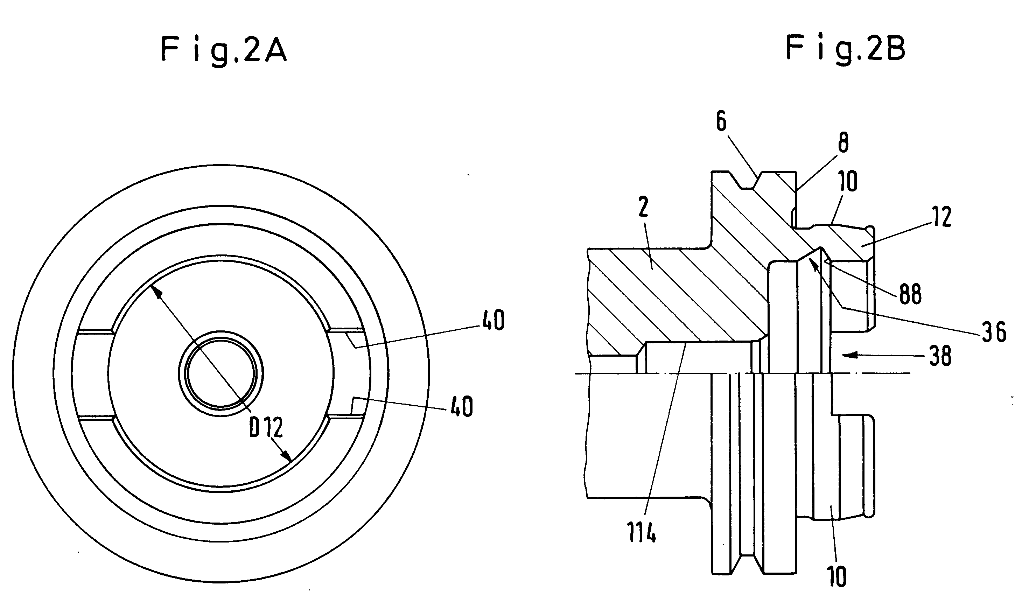

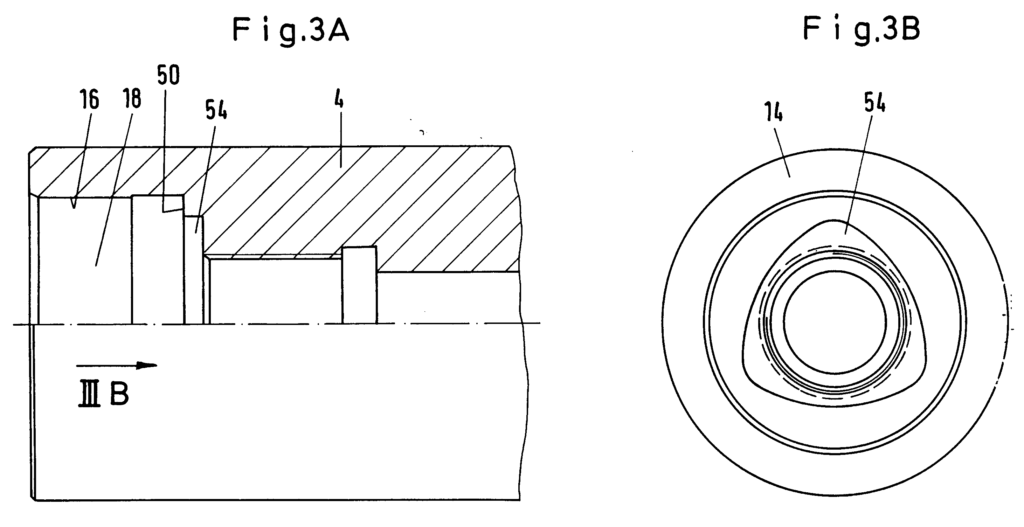

Die Werkzeug-Grundaufnahme 2, die im einzelnen in den Fig. 2A und 2B gezeigt ist, weist eine Radialringfläche 8 und eine Zentrierfläche 10 auf, die an der Außenseite eines Zentrierzylinders 12 ausgebildet ist. Zu den Flächen 8 und 10 existieren auf seiten der Spindel korrespondierende Gegenflächen 14 und 16, die aus Fig. 3 im einzelnen hervorgehen. Die Fläche 14 ist wiederum als Radialringfläche ausgebildet und die Fläche 16 ist Bestandteil einer Zentrieraufnahme für den Zentrierzylinder 12. Auf diese Weise entsteht eine Planflächenpaarung, die ununterbrochen bzw. unverletzt ausgebildet werden kann.

Das Lösen und Eindrücken der Kupplung erfolgt wie bei einer Vielzahl herkömmlicher Kupplungsvorrichtungen durch eine zentral in der Spindel 4 aufgenommene Betätigungsstange 20, die gegen die Kraft eines nicht näher dargestellten Federpakets in der Darstellung gemäß Fig. 1 nach links gedrückt werden kann. Über die Betätigungsstange 20 wird ein Keilgetriebe 22 betätigt, über das Spannelemente 24 angesteuert werden. Als Spannelemente 24 sind sechs in gleichmäßigem Winkelabstand von 60° zueinander angeordnete Spannklauen vorgesehen, die klammerartig die Stoßstelle zwischen den zu koppelnden Teilen 2 und 4 überbrücken. Die Spannklauen weisen einen radial innerhalb des Zentrierzylinders 12 liegenden Klauenabschnitt 26, einen sich daran anschließenden Stababschnitt 28 und einen hakenförmigen Endabschnitt 30 auf, der in eine axial bezüglich der Spindel festgelegte Nut eingreift. Durch Angreifen eines Schubkonus 34 können die Spannelemente 24 unter Abstützen ihrer hakenförmigen Endabschnitte 30 in der Nut 32 mit ihren Klauenabschnitten 26 in eine nutartige Ausnehmung 36 im Zentrierzylinder 12 hineinverschwenkt werden und dadurch eine axial gerichtete Anpreßkraft zwischen Werkzeug-Grundaufnahme 2 und Spindel 4 erzeugen.

Zur Übertragung von Drehmomenten zwischen Spindel 4 und Werkzeugsystemmodul 2 ist eine Klauenverzahnung vorgesehen, die nachfolgend näher beschrieben werden soll. Wie aus den Fig. 2A und 2B hervorgeht, ist in den Zentrierzylinder 12 eine diametral verlaufende Mitnahmenut 38 eingearbeitet, d.h. eingeschliffen, so daß zwei Passungs-Planflächen 40 entstehen In diese nutartige Ausnehmung greifen entsprechend geformte Mitnahmerklauen 42 ein, die bei der dargestellten Ausführungsform an einem Mitnahmering 44 ausgebildet sind.

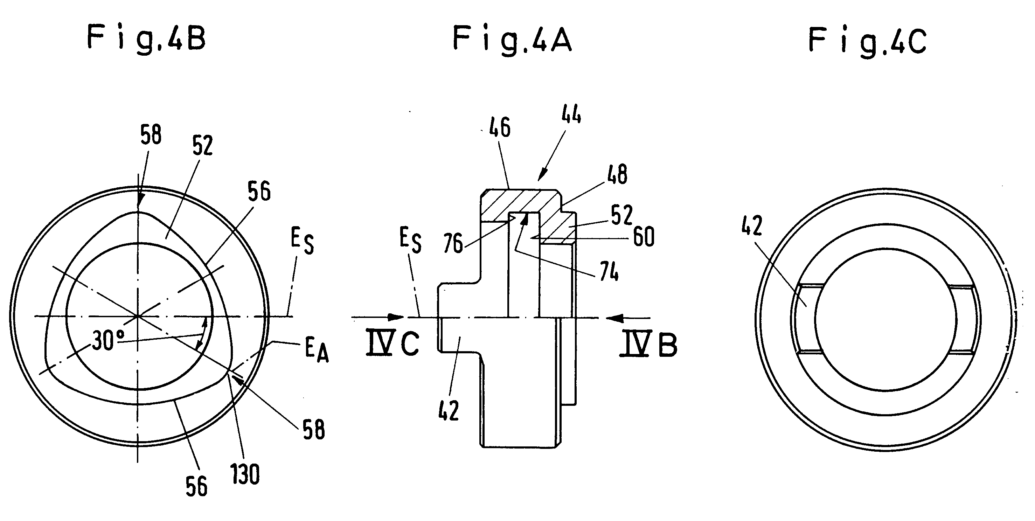

Der Mitnahmering ist in Fig. 4 im einzelnen dargestellt. Er weist eine zylindrische Passungsfläche 46 für den Passungseingriff mit der Zylinderfläche 16 der Spindel 4, eine Radialfläche 48 zur flächigen Anlage an einer Schulterfläche 50 der Zentrieraufnahme 18 der Spindel 4 und einen Mitnahmefortsatz 52 für den Eingriff in eine sich an die Schulter 50 anschließende axiale Vertiefung 54 in der Zentrieraufnahme 18 auf. Der Mitnahmefortsatz 52 hat im wesentlichen ein Polygonprofil, wobei sich gezeigt hat, daß es von Vorteil ist, den Mitnahmefortsatz an eine Prismengestaltung mit drei Kanten anzulehnen. Der Mitnahmefortsatz ebenso wie die Vertiefung 54 weist drei konvex nach außen gewölbte Mantelflächen 56 auf, die über Rundungsabschnitte 58 ineinander übergehen. Auf diese Weise erhält der Mitnahmefortsatz 52 eine Gestaltung, die einem K-Profil ähnlich ist, das im Maschinenbau als formschlüssige Wellen-Nabenverbindung Anwendung findet.

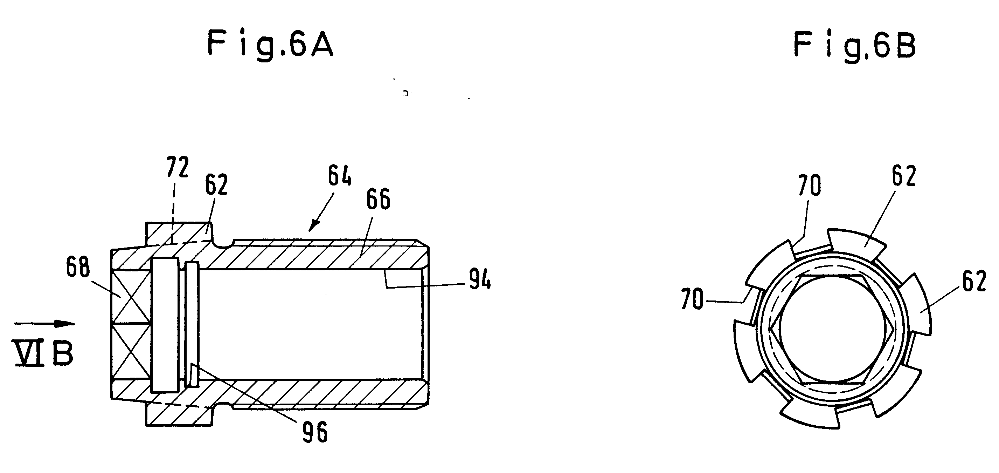

Zur axialen Festlegung des Mitnahmerings 44 weist dieser eine radiale Innenschulter 60 auf, gegen die Haltgeabschnitte 62 eines Klemmkörpers 64 (siehe Fig. 6) drückbar sind. Zu diesem Zweck weist der Klemmkörper einen Gewindeabschnitt 66 auf, mit dem er in die Spindel 4 schraubbar ist. Der Halteabschnitt 62 ist im wesentlichen hülsenförmig ausgebildet, um im Inneren genügend Raum für die Betätigungsstange 20 zu belassen. In dem dem Gewindeabschnitt 66 abgewandten Endbereich weist der Klemmkörper 64 eine Innensechskantausnehmung 68 auf, um das Einschrauben in die Spindel 4 zu erleichtern.

Man erkennt aus den Darstellungen gemäß Fig. 1 und 6, daß die Spannklauen 24 im Klemmkörper 64 geführt sind. Zu diesem Zweck sind zwischen den Halteabschnitten 62 eine der Anzahl der Spannklauen entsprechende Zahl von Führungsausnehmungen 70 vorgesehen, in denen mit Spielpassung die Spannklauen 24 radial beweglich geführt sind. Zu diesem Zweck ist der Nutgrund der Führungsausnehmungen 70 zum Werkzeugsystemmodul 2 hin abfallend, so daß die Spannklauen eine begrenzte Schwenkbewegung in radialer Richtung innerhalb der Führungsausnehmungen 70 durchführen können. Der Nutgrund 72 ist durch die gestrichelte Linie in Fig. 6A angedeutet.

Um die Spannklauen 24 in axialer Richtung an der Spindel 4 festzulegen, ist im Mitnahmering 44 eine Stütznut 74 vorgesehen, deren vordere Nutwand 74 - wie aus Fig. 1 ersichtlich - im gekuppelten Zustand der Teile 2 und 4 in flächigem Anlagekontakt mit dem hakenförmigen Endabschnitt 30 der jeweiligen Spannklaue 24 steht. Zur Ermöglichung der oben angesprochenen beschränkten Verschwenkbewegung der Spannklauen 24 ist die Stütznut 74 breiter als der hakenförmige Endabschnitte 30 ausgebildet.

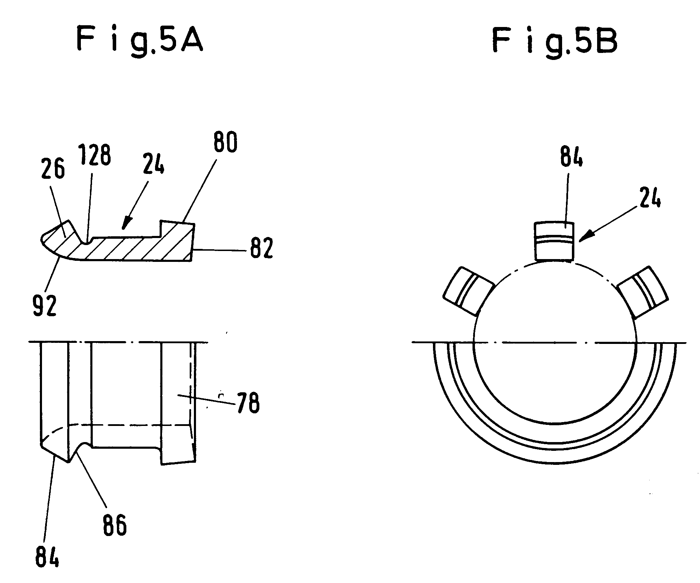

In der Fig. 5 sind Einzelheiten der Gestaltung der Spannklauen 24 entnehmbar. Als Rohling bei der Herstellung derartiger Spannklauen dient ein hülsenförmiger rotationssymmetrischer Körper 78, aus dem dann die entsprechenden Spannklauen 24 ausgeschnitten werden, wie dies im oberen Teil der Fig. 5B ersichtlich ist. Der hakenförmige Endabschnitt 30 weist zwei Konusflächen 80 und 82 auf, um die Verschwenkbewegung in der Führungsausnehmung 70 des Klemmkörpers 64 zu ermöglichen. Der Klauenabschnitt 26 ist auf seiner Außenseite ebenfalls von zwei Konusflächen 84 und 86 gebildet, von denen die Konusfläche 86 in flächigen Anlagekontakt mit einer Flanke 88 (siehe Fig. 2B) der nutartigen Ausnehmung 36 im Zentrierzylinder 12 bringbar ist. Die andere Konusfläche 84 des Klauenabschnitts 26 fällt zum Werkzeugsystemmodul 2 hin ab, wodurch erreicht wird, daß insbesondere im Zusammenwirken mit einer Fase 90 an der Stirnseite des Zentrierzylinders 12 beim Einführen des Zentrierzylinders in die Zentrieraufnahme 18 ein zwangsweises Nachinnenschwenken der Spannklauen 24 erfolgt.

Man erkennt aus der Darstellung gemäß Fig. 1, daß die Abmessungen der Spannklauen 24 an die Gestaltung der nutartigen Ausnehmung 36 und der Stütznut 74 angepaßt sind, was eine möglichst großflächige Anlage zwischen den Funktionsflächen schafft. Aus Fig. 1 ist ferner ersichtlich, daß der hakenförmige Endabschnitt 30 der jeweiligen Spannelemente 24 im Zusammenwirken mit der Führungsausnehmung 70 in radialer Richtung ständig fixiert ist, wodurch einem Verkanten der Spannklauen 24 wirksam entgegengewirkt wird.

Durch die Neigung der Konusfläche 86 kann auf die Größe der zu erzeugenden Axialkraft Einfluß genommen werden. Eine weitere Beeinflussungsmöglichkeit besteht durch die Gestaltung des Schubkonus 34 im Zusammenwirken mit der zugehörigen Stützfläche 92 auf seiten der Spannklauen 24. Auf diese Weise ist eine zweistufige Übersetzung der in axialer Richtung eingeleiteten Zugkraft der Betätigungsstange 20 möglich. Im gezeigten Ausführungsbeispiel ist die Stützfläche 92 konvex gestaltet, so daß eine linienförmige Berührung zwischen dem Schubkonus 34 und Stützfläche 92 erfolgt. Diese Gestaltung ermöglicht eine Selbstzentrierung des Schubkonus 34 und dadurch eine querkraftfreie Einleitung der axialen Druckkraft in die beiden zu koppelnden Komponenten. Um dem Schubkonus 34 den hierfür erforderlichen radialen Freiheitsgrad zu geben, ist die Betätigungsstange 20 im Bereich der Schnittstelle radial nicht fest gelagert. Sie erstreckt sich mit radialem Spiel durch eine Innenausnehmung 94 (siehe Fig. 6A) des Klemmkörpers 64. Die Innenausnehmung 94 weist eine Einstichnut 96 zur Aufnahme eines elastischen Ringes, beispielsweise eines O-Ringes 98 auf, der sich vorzugsweise linienförmig an einem zylinderförmigen Kopplungsansatz 100 des Schubkonus 34 abstützt. Der Außendurchmesser des Kopplungsansatzes 100 ist somit ebenfalls kleiner als der Innendurchmesser der Innenausnehmung 94 im Klemmkörper 64, so daß eine gedämpfte radiale Beweglichkeit des Schubkonus 34 relativ zur Spindel 4 verbleibt. Über den Kopplungsansatz 100 erfolgt darüber hinaus die Verbindung mit der Betätigungsstange 20, wofür ein Innengewinde 102 vorgesehen ist. Auf der dem Innengewinde 102 abgewandten Seite weist der Schubkonus 34 eine Planfläche 104 auf, in der mehrere Ausnehmungen 106 für den Eingriff eines geeigneten Werkzeugs vorgesehen sind.

Koaxial zum Innengewinde 102 ist ein weiteres Innengewinde 108 zur Aufnahme eines Gewindeabschnitts 110 eines Hohlzapfens 112 vorgesehen, der mit Passung in eine Bohrung 114 der Werkzeug-Grundaufnahme 2 eingreifen kann. An der Außenseite des Hohlzapfens 112 sind zwei Ringnuten 116 für die Aufnahme von Dichtringen 118 vorgesehen, um bei einer Schmiermittelversorgung durch eine Längsausnehmung 120 und eine Innenausnehmung 122 des Hohlzapfens 112 ein Eindringen von Schmier- bzw. Kühlmittel in den Raum 124 radial innerhalb des Zentrierzylinders 12 zu verhindern.

Aus der vorstehenden Beschreibung ist ersichtlich, daß unter Steuerung durch die Betätigungsstange 20 ein zwangsweises Nachaußendrücken der Klauenabschnitte 26 in die nutartige Ausnehmung 36 hinein erfolgt, wodurch eine mehrfach übersetzte axiale Andruckkraft im Bereich der Radialringflächen 8 und 14 erzeugt werden kann. Wenn die Betätigungsstange 20 gemäß Fig. 1 nach links bewegt wird, werden die Spannklauen 24 kraftfrei, wobei die Spannklauen 24 radial so weit nach innen verschwenken können, daß der jeweils radial äußerste Punkt des Klauenabschnitts innerhalb des Innendurchmessers $D_{12}$ des Zentrierzylinders 12 (siehe Fig. 2A) zu liegen kommt. Die Konusflächen 84 und 86 am Klauenabschnitt 26 sorgen dafür, daß beim Herausziehen des Zentrierzylinders 12 zwangsweise ein Nachinnenschwenken der Spannklauen erfolgt. Um diese Bewegung der Spannklauen zusätzlich zu unterstützen, ist in Fig. 1 ein elastischer Ring 126 angedeutet, der in Rillen 128 (siehe Fig. 5A) aufgenommen ist und die Spannklauen 24 radial nach innen vorspannt.

Aus der vorstehenden Beschreibung geht hervor, daß die Kupplungsvorrichtung nicht nur in der Lage ist, große axiale Spannkräfte über den Umfang gleichmäßig verteilt aufzubringen, sondern daß darüber hinaus durch die räumliche Trennung der Komponenten zur Übertragung der Axialkräfte und der Umfangskärfte eine Optimierung der hierfür erforderlichen Funktionsflächen erfolgen kann Dabei ergibt sich der weitere Vorteil, daß die Kupplungsvorrichtung auch dazu herangezogen werden kann, einen Werkzeugsystemmodul in vorbestimmten Winkelschritten bezüglich der Werkzeugmaschine zu indexieren. Zu diesem Zweck wird erneut auf die Fig. 4 Bezug genommen, aus der ersichtlich ist, daß die Symmetrieebene $E_S$ der Mitnehmerklauen 42 mit einer Axialebene $E_A$ durch einen Kantenscheitel 130 des Mitnahmefortsatzes 52 einen Winkel von $30°$ einschließt. Dies bedeutet, daß die Werkzeug-Grundaufnahme in Teilschritten von jeweils $30°$ bezüglich der Spindel 4 positioniert werden kann.

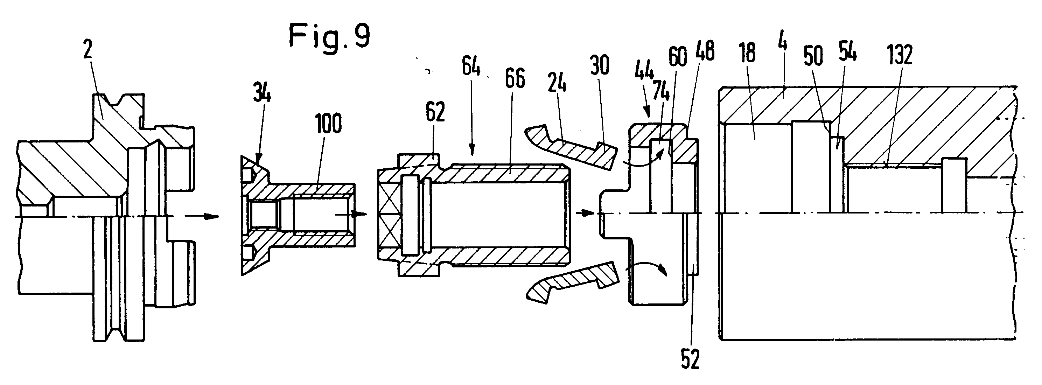

Nachstehend wird unter Bezugnahme auf die Fig 9 im einzelnen beschrieben, in welcher Weise die Montage der vorstehend beschriebenen Kupplungsvorrichtung erfolgt. Zunächst werden die Spannklauen 24 mit ihren hakenförmigen Endabschnitten 30 in die Stütznut 74 des Mitnahmerings 44 eingefädelt und in gleichmäßigem Winkelabstand zueinander grob positioniert. Dies geschieht vorzugsweise in vertikaler Lage. Anschließend wird der Klemmkörper 64 mit seinem Gewindeabschnitt 66 radial innerhalb der Spannklauen 24 durch den Mitnahmering 44 geschoben, und zwar so weit, daß der sternförmige Halteabschnitt 62 gegen die Innenschulter 60 des Mitnahmerings 44 anschlägt. In diesem Zustand sind die Spannklauen 24 bereits formschlüssig im Mitnahmering 44 gehalten. Nun wird die Gesamtheit aus Mitnahmering 44, Spannklauen 24 und Klemmkörper 64 in die Zentrieraufnahme 18 eingeschoben und durch Eindrehen des Gewindeabschnitts 66 in ein entsprechendes Innengewinde 132 der Spindel 4 derart befestigt, daß der Mitnahmefortsatz 52 formschlüssig in die Vertiefung 54 eingreift und eine flächige Anlage zwischen der Schulterfläche 50 der Spindel 4 und der Radialfläche 48 des Mitnahmerings 44 entsteht.

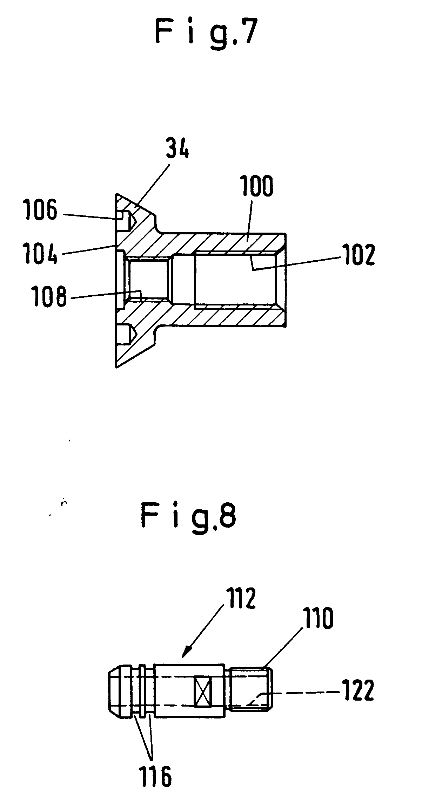

Nach Einlegen des elastischen Rings 98 in die Nut 96 wird die in Fig. 9 nicht dargestellte Betätigungsstange mit dem Kopplungsfortsatz 100 des Schubkonus 34 verschraubt, woraufhin der in Fig. 8 dargestellte Hohlzapfen 112 seinerseits mit dem Schubkonus 34 verbunden wird. Wenn die Betätigungsstange entgegen dem vorstehend erwähnten Federpakte in der Darstellung gemäß Fig. 1 und 9 nach links verschoben wird, gelangt der Schubkonus 34 außer Eingriff mit den Stützflächen 92 der Spannklauen 24, woraufhin die Werkzeug-Grundaufnahme 2 an die Spindel 4 angesetzt werden kann.

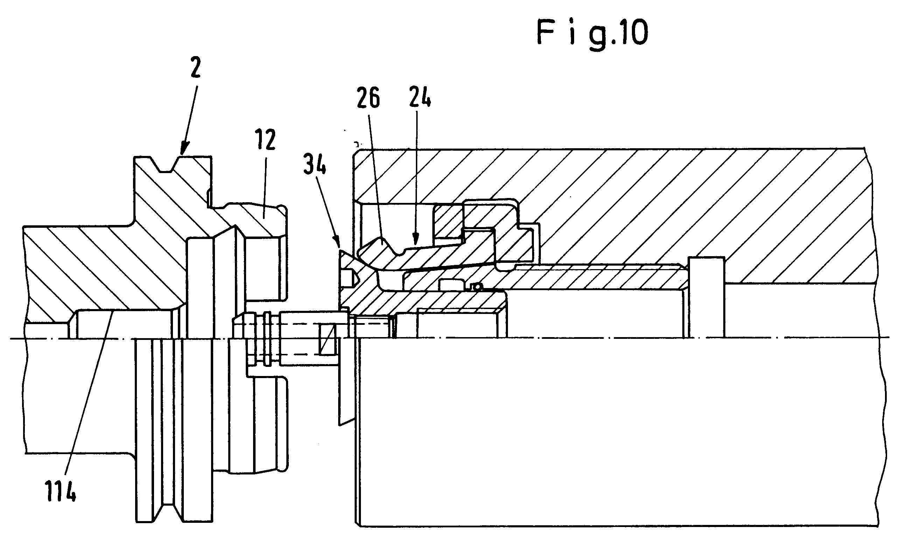

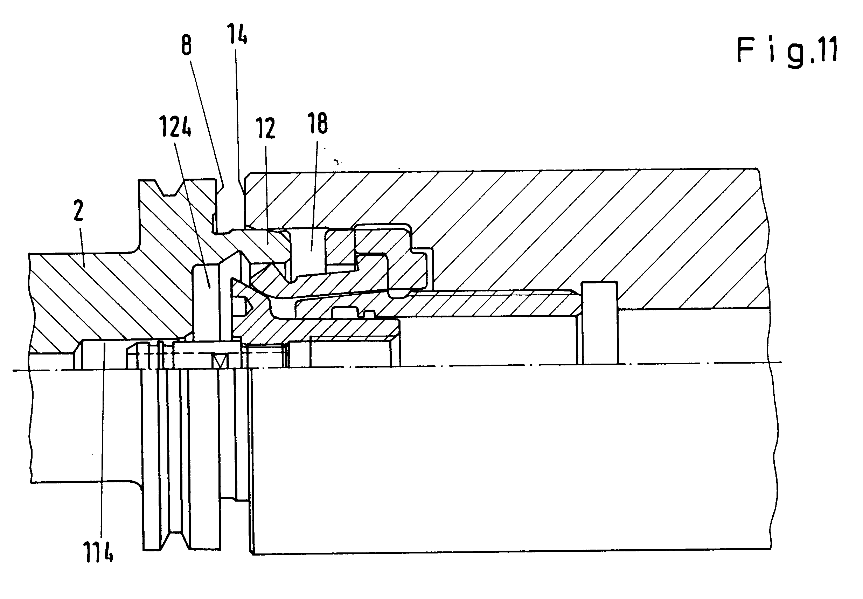

In Fig. 10 ist der Zustand der Kupplungsvorrichtung zu Beginn des Ankupplungsvorgangs dargestellt. Aus Vereinfachungsgründen ist die Betätigungsstange weggelassen. Auch die Dichtringe 118 am Hohlzapfen 112 sind zeichnerisch nicht dargestellt. Der Schubkonus 34 nimmt in dieser Position seine linke Endstellung ein, so daß die Spannklauen 24 radial so weit nach innen schwenkbar sind, daß der Zentrierzylinder 12 der Werkzeug-Grundaufnahme 2 über die Klauenabschnitte 26 hinweg schiebbar ist, wie dies in Fig. 11 gezeigt ist. Gleichzeitig taucht beim Einschieben des Zentrierzylinders 12 in die Zentrieraufnahme 18 der Hohlzapfen 112 in die Bohrung 114 der Werkzeug-Grundaufnahme 2 ein, wobei über die -nicht dargestellten-Dichtringe eine fluiddichte Abdichtung des Raums 124 zur Bohrung 114 erfolgt. Unter der Zentrierwirkung der Fläche 10 werden die Radialringflächen 8 und 14 in planparalleler Ausrichtung aufeinander zugeschoben. Schließlich greifen die Mitnehmerklauen 42 in die Mitnehmernut 38 ein, woraufhin die Ringflächen 8 und 14 in Anlagekontakt miteinander gebracht werden können.

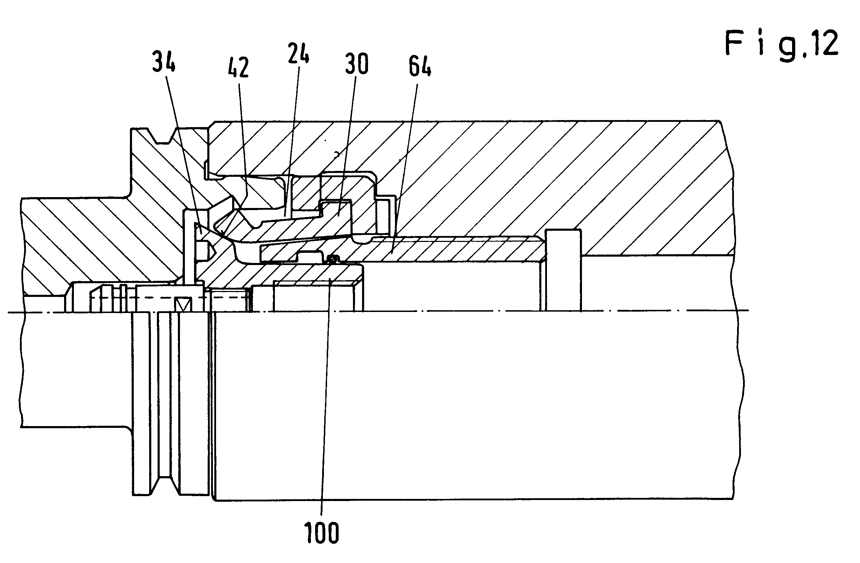

Dieser Zustand ist in der Darstellung gemäß Fig. 12 gezeigt. Indem die nicht dargestellte Betätigungsstange losgelassen wird, wird das ebenfalls nicht dargestellte Federpaket wirksam und versucht, die Betätigungsstange zusammen mit dem Schubkonus 34 gemäß Fig 12 nach rechts zu bewegen. Hierbei gleitet der Schubkonus auf die Stützfläche 92 auf und drückt die Klauenabschnitte 26 radial gleichmäßig nach außen. Während der sich einstellenden Verschwenkbewegung der Spannklauen 24 in den Führungsausnehmungen 70 des Klemmkörpers 64 werden die hakenförmigen Endabschnitte 30 ständig lagefixiert in der Stütznut 74 des Mitnahmerings 44 gehalten. Vorzugsweise erfolgt die Abstimmung der geometrischen Verhältnisse derart, daß im gespannten Zustand eine flächige Anlage sowohl des hakenförmigen Endabschnitts 30 als auch des Klauenabschnitts 26 an den jeweiligen Gegenflächen 76 bzw. 36 erfolgt.

Schließlich nehmen die Bauteile der Kupplungsvorrichtung im gekuppelten Zustand die Lage gemäß Fig. 1 ein, wobei sich ein Selbstzentrierungseffekt des Schubkonus durch die radial elastische Lagerung des Kupplungsansatzes 100 im Klemmkörper 64 ergibt.

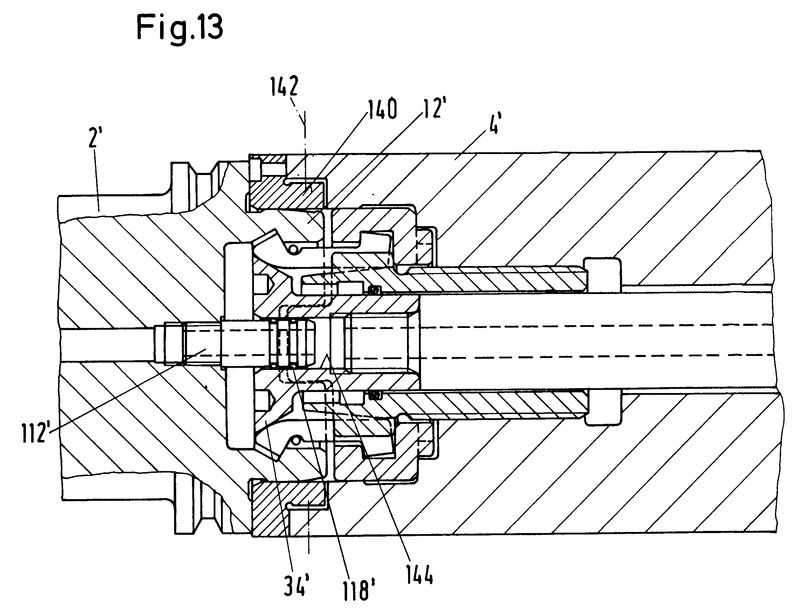

In Fig. 13 ist eine weitere Ausführungsform der Kupplungsvorrichtung gezeigt, die sich allerdings nur in einigen Punkten von der zuvor beschriebenen Ausführungsform unterscheidet. Aus diesem Grunde sind in dieser Figur nur diejenigen Bezugszeichen enthalten, die zur Erläuterung dieser Variante erforderlich sind. Diejenigen Bauteile der Kupplungsvorrichtung, die mit den zuvor beschriebenen Bauteilen unmittelbar vergleichbar sind, sind mit entsprechenden Bezugsnummern versehen, die durch einen " ' " ergänzt sind.

Die erste Abwandlung der in Fig. 13 gezeigten Ausführungsform besteht darin, daß auf seiten der Spindel 4' ein Zentrierring 140 vorgesehen ist, der vorzugsweise in radialer Richtung einstellbar an der Stirnseite der Spindel 4 befestigt ist. Dies ist durch die stichpunktierte Linie 142 angedeutet. Durch diese Gestaltung gelingt es, den Rundlauf des Werkzeugsystemmoduls 2' zu justieren. Der Zenrierring 140 besteht bevorzugterweise aus gehärtetem Stahl oder aus Hartmetall, um bevorzugterweise aus gehärtetem Stahl oder aus Hartmetall, um Verschleißerscheinung möglichst gering zu halten.

Eine weitere Modifizierung im Vergleich zur Ausführungsform gemäß Fig. 1 bis 12 liegt im Bereich des Hohlzapfens 112' vor. Abweichend von der zuvor beschriebenen Ausführungsform ist nunmehr der Hohlzapfen 112 fest mit dem Werkzeugsystemmodul in der Ausgestaltung als Werkzeug-Grundaufnahme 2' verbunden. Das auskragende Ende ist mit Passung in einer Innenbohrung 144 des Schubkonus 34' aufgenommen, wobei wiederum Dichtringe 118' Anwendung finden können. Es ist ersichtlich, daß mit dieser Gestaltung der Aushubweg zum Lösen der Teile 2' und 4' auf die Länge des Zentrierzylinders 12' beschränkbar ist.

Unter Abweichung vom dargestellten Ausführungsbeispiel ist es auch möglich, mit radial nach innen gekröpften Spannklauen 24 zu arbeiten, um auf diese Weise unter Beibehaltung der Abstützung der hakenförmigen Endabschnitte 30 in eine nutartige Ausnehmung eines Zentrierzylinders 12 eingreifen zu können der einen reduzierten Durchmesser hat. In diesem Fall ist es sinnvoll, mit einem Zwischenring zu arbeiten, der in die Zentrieraufnahme 18 der Spindel 4 eingesetzt ist und einen Innendurchmesser hat, der dem Außendurchmesser des reduzierten Zentrierzylinders entspricht. Durch diese Variante gelingt es, auf geringstem Bauraum an ein und derselben Schnittstelle zur Maschine Werkzeugsystemmodule stark unterschiedlicher Durchmesserstufen anzukoppeln.

In weiterer Abwandlung des dargestellten Ausführungsbeispiels ist es selbstverständlich auch möglich, das Kupplungssystem zur Kupplung anderer Maschinen- bzw. Werkzeugteile heranzuziehen. So ist das System ebenfalls bei stehenden Werkzeugen, wie z.B. bei Drehmeißeln, anwendbar.

Beim beschriebenen Ausführungsbeispiel sind sechs Spannklauen 24 vorgesehen. Selbstverständlich ist es auch möglich, die Zahl der Spannklauen zu variieren, wobei jedoch die Zahl "3" nicht unterschritten werden sollte, um die Axialkraft möglichst gleichmäßig über den Umfang zu verteilen.

Aus der Beschreibung wird klar, daß die beschriebene Kupplungsvorrichtung auch dazu geeignet ist, herkömmliche Werkzeugmaschinen nachzurüsten. Hierzu ist lediglich erforderlich, daß ein Spindelvorsatzflansch angebracht wird, der dann mit der Zentrieraufnahme 18 ausgestattet wird.

Im folgenden wird eine weitere Ausführungsform der Kupplungsvorrichtung beschrieben, die zusätzlich mit einem Spülkanalsystem ausgestattet ist. Der Einfachheit halber werden für diejenigen Komponenten, die mit den Teilen der vorstehend beschriebenen Ausführungsform vergleichbar sind, identische Bezugszeichen verwendet.

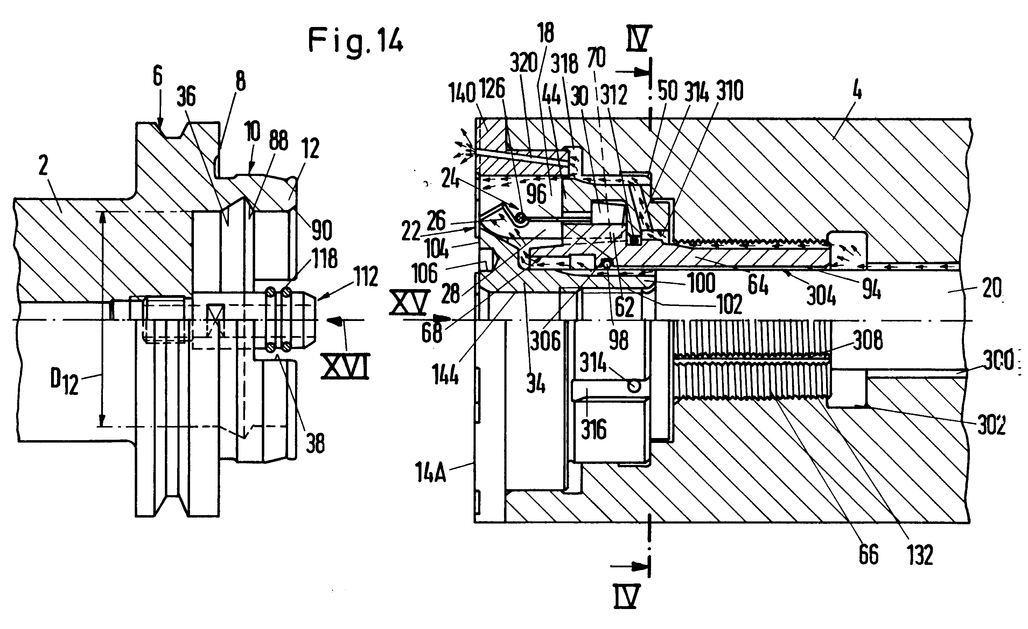

In Fig. 14 ist mit dem Bezugszeichen 2 ein Werkzeugsystemmodul, wie z.B. eine Werkzeug-Grundaufnahme und mit dem Bezugszeichen 4 eine Werkzeugmaschinenspindel bezeichnet, wie z.B. die Spindel einer Schleifmaschine.

Das Lösen und Einrücken der Kupplung erfolgt in gleicher Weise wie bei dem vorstehend beschriebenen Ausführungsformen.

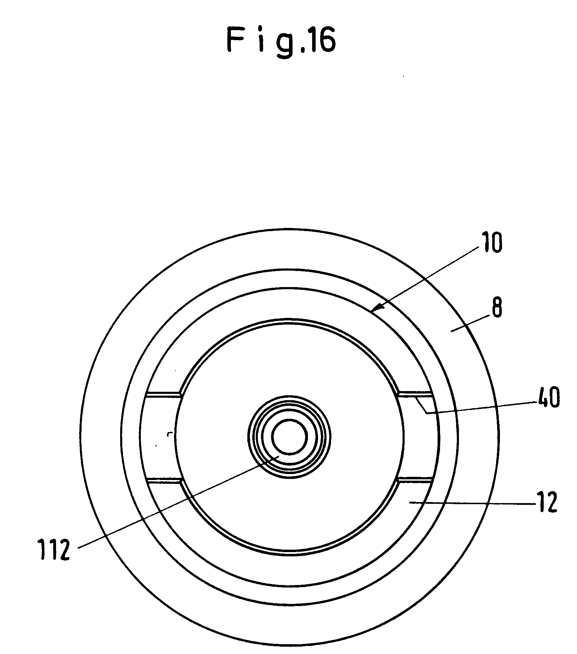

Zur Übertragung von Drehmomenten zwischen Spindel 4 und Werkzeugsystemmodul 2 ist eine Klauenverzahnung vorgesehen, die nachfolgend näher beschrieben werden soll. In den Zentrierzylinder 12 ist gemäß Fig. 16 eine diametral verlaufende Mitnahmenut 38 eingearbeitet, d.h. eingeschliffen, so daß zwei Passungs-Planflächen 40 entstehen. In diese nutartige Ausnehmung greifen entsprechend geformte Mitnehmerklauen 42 ein, die bei der dargestellten Ausführungsform an einem Mitnahmering 44 ausgebildet sind.

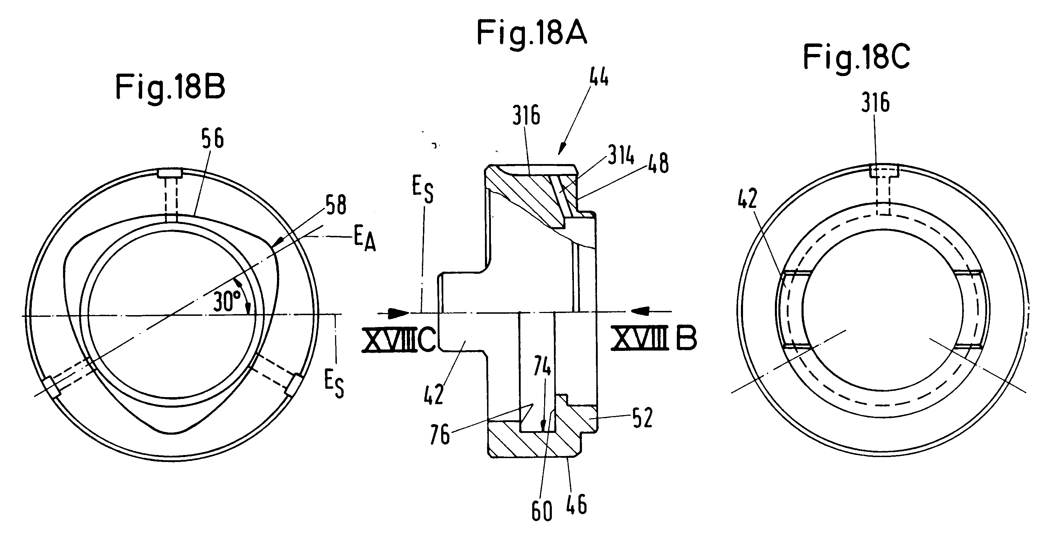

Zur Gestaltung des Mitnahmerings kann auf die Beschreibung der Fig. 4 verwiesen werden Fig. 18 läßt die gemeinsamen baulichen Einzelheiten erkennen.

Man erkennt aus der Darstellung gemäß Fig. 14 nicht im einzelnen, daß die Spannklauen 24 im Klemmkörper 64 geführt sind. Zu diesem Zweck sind zwischen den Halteabschnitten 62 eine der Anzahl der Spannklauen entsprechende Zahl von Führungsausnehmungen vorgesehen, in denen mit Spielpassung die Spannklauen 24 radial beweglich geführt sind. Ferner ist ein Nutgrund 70 der Führungsausnehmungen zum Werkzeugsystemmodul 2 hin abfallend, so daß die Spannklauen eine begrenzte Schwenkbewegung in radialer Richtung innerhalb der Führungsausnehmungen durchführen können. Der Nutgrund ist durch die gestrichelte Linie in Fig. 14 angedeutet.

Einzelheiten der Gestaltung der Spannklauen 24 ergeben sich aus der Beschreibung der Fig. 5A und B.

Ein Hohlzapfen 112 ist fest mit dem Werkzeugsystemmodul 2 verbunden. Das auskragende Ende ist mit Passung in einer Innenbohrung 144 des Schubkonus 34 aufgenommen, wobei Dichtringe 118 auf Seiten des Hohlzapfens 112 vorgesehen sind. Es ist ersichtlich, daß mit dieser Gestaltung der Aushubweg zum Lösen der Teile 2 und 4 auf die Länge des Zentrierzylinders 12 beschränkbar ist.

Aus der vorstehenden Beschreibung ist ersichtlich, daß in Übereinstimung mit dem vorstehend beschriebenen Ausführungsbeispiel unter Steuerung durch die Betätigungsstange 20 ein zwangsweises Nachaußendrücken der Klauenabschnitte 26 in die nutartige Ausnehmung 36 hinein erfolgt, wodurch eine mehrfach übersetzte axiale Andruckkraft im Bereich der Radialringflächen 8 und 14 erzeugt werden kann.

Die Montage der weiteren Ausführungsform erfolgt entsprechend der vorstehend beschriebenen Kupplungsvorrichtung.

Abweichend von der bereits beschriebenen Ausführungsform ist auf Seiten der Spindel 4 ein Zentrierring 140 vorgesehen, der vorzugsweise in radialer Richtung einstellbar an der Stirnseite der Spindel 4 befestigt ist Durch diese Gestaltung gelingt es, den Rundlauf des Werkzeugsystemmoduls 2 zu justieren. Der Zentrierring 140 besteht bevorzugterweise aus gehärtetem Stahl oder aus Hartmetall, um Verschleißerscheinungen möglichst gering zu halten.

Zur Erzielung eines Reinigungseffektes der miteinander in Eingriff bringbaren Funktionsflächen der Kupplungsteile ist ein nachfolgend näher zu beschreibendes Druckluft-Spülkanalsystem vorgesehen. Hierbei wird Druckluft aus einer nicht näher dargestellten Quelle einem Ringkanal 300 zwischen der Zugstange 20 und der Spindel 4 zugeführt. Der Ringkanal 300 mündet in einen Druckluft-Versorgungsraum 302, wie dies durch die Pfeile in Fig. 14 dargestellt ist. Vom gemeinsamen Druckluft-Versorgungsraum 302 wird eine Druckluft-Spülströmung in zwei Zweigen erzeugt. Die eine Druckluft-Zweigströmung gelangt durch einen Zwischenraum 304 zwischen Zugstange 20 und Führungskörper 64 in mehrere vorzugsweise über den Umfang gleichmäßig verteilte Längsausnehmungen 306 auf der Außenseite des Kopplungsansatzes 100 des Schubkonus 34. Von dort gelangt die Strömung zur Vorderseite des Führungskörpers 64 und entweicht zwischen dem Führungskörper 64 und der Rückseite des Schubkonus 34 in radialer Richtung nach außen, wodurch die Klauenabschnitte 26 mit Druckluft gereinigt werden können.

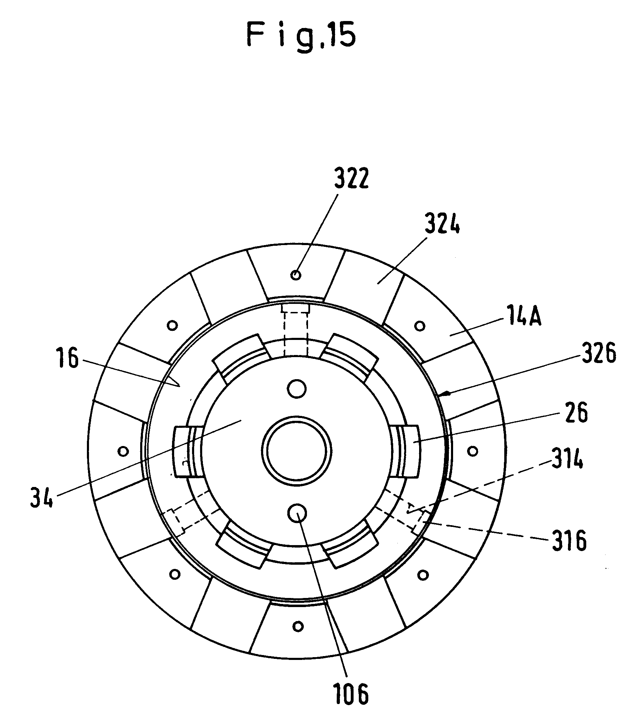

Die andere Druckluft-Zweigströmung gelangt ausgehend vom Druckluft-Versorgungsraum 302 in vorzugsweise mehrere Axialkerben 308 im Bereich des Gewindes des Führungskörpers 64. Über die Axialkerben 308 wird ein Ringraum 310 versorgt, der über einen Dichtring 312 zwischen Führungskörper 64 und Mitnahmering 44 zu den Spannklauen 24 hin abgedichtet ist. Vom Ringraum 310 aus verlaufen vorzugsweise im Umfang gleichmäßig verteilte diskrete Stichkanäle 314, die jeweils in eine Längsnut 316 auf der Außenseite des Mitnahmerings 44 münden. Am vorderen Ende der Längsnut 316 zweigt sich die Druckluftströmung erneut auf. Über einen Ringrayum 318 gelangt Druckluft durch eine Vielzahl von vorzugsweise über den Umfang gleichmäßig verteilten Druckluft-Spülkanälen 320 zu Radialringflächensegmenten 14A (Fig. 15), über die die Abstützung des Werkzeugsystemmoduls 2 an der Spindel 4 erfolgt. Die Druckluft-Spülkanäle 320 sind dabei so ausgebildet, daß die Mündungsöffnungen 322 im wesentlichen mittig aus den Radialringflächensegmenten 14A austreten. Man erkennt aus der Darstellung gemäß Fig. 14, daß die Radialringflächensegmente 14A dadurch gebildet sind, daß diametral verlaufende Nuten 324 in die Stirnseiten der Spindel eingebracht sind. Auf diese Weise entstehen Schmutzkammern, die einer Verschmutzung der Funktionsflächen 14A entgegenwirken.

Vom Ringraum 318 aus geht ein weiterer Reinigungs-Druckluftstrom zur Innenzylinderfläche 16, wie dies durch die Pfeile in Fig. 14 dargestellt ist. Diese Teilströmung wird dadurch erzeugt, daß eine Abstimmung des Innendurchmessers des Zentrierrings 140 an den Außendurchmesser des Mitnahmerings 44 vorgenommen wird, so daß ein Ringspalt 326 entsteht.

Aus der Beschreibung wird klar, daß beim Zusammenführen der zu kuppelnden Teile 2 und 4 die aus den Druckluft-Spülkanälen 320 austretende Druckluft mit zunehmender Annäherung der Teile 2 und 4 immer stärker beschleunigt wird, wodurch der Säuberungseffekt der Planflächensegmente 14A und der Ringfläche 8 verstärkt wird. Im vollkommen zusammengefahrenen Zustand der Teile 2 und 4 werden die Mündungsöffnungen 322 von der Planfläche 8 verschlossen, so daß ein weiteres Entweichen von Druckluft verhindert und somit Energie gespart wird. Nach Abschluß des Kupplungsvorgangs wird die Druckluftversorgung abgestellt.

Unter Abweichung vom dargestellten Ausführungsbeispiel ist es auch möglich, mit radial nach innen gekröpften Spannklauen 24 zu arbeiten, um auf diese Weise unter Beibehaltung der Abstützung der hakenförmigen Endabschnitte 30 in eine nutartige Ausnehmung eines Zentrierzylinders 12 eingreifen zu können, der einen reduzierten Durchmesser hat. In diesem Fall ist es sinnvoll, mit einem Zwischenring zu arbeiten, der in die Zentrieraufnahme 18 der Spindel 4 eingesetzt ist und einen Innendurchmesser hat, der dem Außendurchmesser des reduzierten Zentrierzylinders entspricht. Durch diese Variante gelingt es, auf geringstem Bauraum an ein und derselben Schnittstelle zur Maschine Werkzeugsystemmodule stark unterschiedlicher Durchmesser Stufen anzukoppeln.

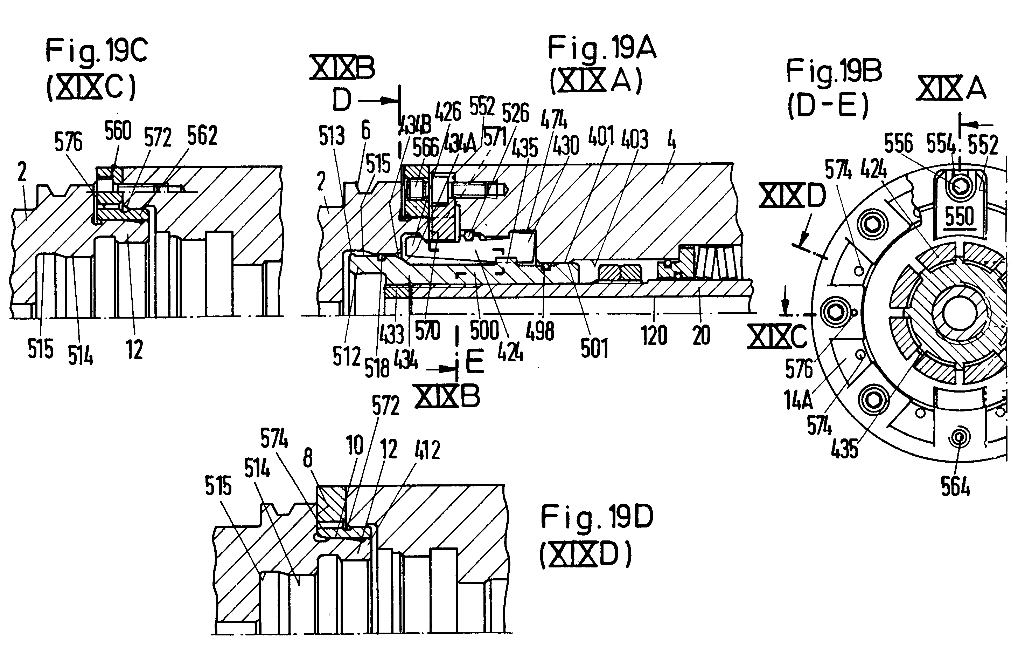

Nachfolgend wird auf die Fig. 19A bis 19D Bezug genommen, in denen eine weitere Ausführungsform der Kupplungsvorrichtung gezeigt ist. Aus Vereinfachungsgründen sind wiederum diejenigen Bestandteile der Kupplungsvorrichtung, die den Komponenten vorstehend beschriebener Ausführungsformen im wesentlichen entsprechen, mit identischen Bezugszeichen bezeichnet. Der wesentliche Unterschied zwischen der Ausführungsform gemäß Fig. 19 und den vorstehend beschriebenen Ausführungsformen besteht darin, daß kein Mitnahmering 44 mehr vorgesehen ist, daß die Mitnahme in Umfangsrichtung durch besonders gestaltete Mitnehmersteine erfolgt und daß eine Vorzentrierungseinrichtung vorgesehen ist.

Für einen hakenförmigen Endabschnitt 430 der Spannelemente 424, von denen abweichend von den vorstehend beschriebenen Ausführungsbeispielen acht vorgesehen sind, ist in der Spindel 4 eine hinterschnittene Stütznut 474 vorgesehen. Die Stabilisierung der Spannelemente 424 in Achsrichtung erfolgt durch Radialstege 435 in einem Kopplungsansatz 500 eines Schubkonusteils 434, der mit der Betätigungsstange 20 fest verschraubt und mittels einer Konter-Hohlschraube 433 gesichert ist. Der Schubkonuskörper 434 bildet auf der Außenseite zwischen dem Kopplungsansatz 500 und einem hohlzylindrischen Fortsatz 512, der mit einer Passungsbohrung 514 im Werkzeugsystemmodul 2 zusammenwirkt, zwei im Winkel zueinander stehende Konusflächen 434A und 434B aus, von denen letztere mit der Mittelachse einen kleineren Winkel als die Fläche 434A einschließt. Durch diese Gestaltung kann der Stellweg der Betätigungsstange 20 reduziert werden, indem über die Fläche 434A ein verhältnismäßig schnelles Nachaußenbewegen der Klauenabschnitte 426 erfolgt, bevor über die Fläche 434B die eigentliche Anpreßkraft erzeugt wird.

Das Schubkonusteil 434 weist im Bereich seiner beiden Endabschnitte zylindrische Passungsflächen 513 bzw. 501 auf, von denen die erstgenannte mit der Passungsbohrung 514 und die letztere mit einem Bohrungsabschnitt 401 der Spindel zusammenwirkt, der sich auf der dem Werkzeugsystemmodul 2 abgewandten Seite in eine Ausnehmung 403 erweitert. Entsprechend erweitert sich die Passungsbohrung 514 in einen Ausnehmungsabschnitt 515. Der hohlzylindrische Fortsatz 512 steht über eine Dichtung in Eingriff mit der Passungsbohrung 514. Eine weitere Dichtung 498 ist zwischen dem Bohrungsabschnitt 401 und dem Kopplungsansatz 500 vorgesehen.

Die Fig. 19A zeigt die Komponenten der Kupplungsvorrichtung im gelösten Zustand der Kupplung, indem die Betätigungsstange 20 nach links verschoben ist. Über die Flächenpaarung 401 und 501 ist das Schubkonusteil 434 und damit der hohlzylindrische Fortsatz 512 zur Spindel 4 zentriert, so daß die Passungsfläche 513, die bevorzugterweise ballig bzw. sphärisch ausgebildet ist, eine Zentrierhilfe für das Ankoppeln des Werkzeugsystemmoduls 2 bilden kann. Wenn die Betätigungsstange 20 losgelassen und damit gemäß Fig. 19A nach rechts verschoben wird, gelangt die zylindrische Passungsfläche 501 außer Eingriff mit dem Bohrungsabschnitt 401, so daß auf das Schubkonusteil 434 keinerlei Zwangskräfte mehr ausgeübt werden, weil die Passungsfläche 513 im Ausnehmungsabschnitt 515 zu liegen kommt. Die Betätigungsstange 20 ist somit zusammen mit dem Schubkonusteil 434 radial frei schwimmend in der Werkzeugspindel 4 gelagert, wenn die Spannkraft aufgebracht wird. Die Zwangszentrierung des Schubkonusteils 434 ist vorzugsweise zu Beginn der Preßkrafterzeugung aufgehoben.

Eine zusätzliche Zentrierhilfe ist bei der Ausführungsform gemäß Fig. 19 durch eine besondere Gestaltung des Stirnbereichs des Zentrierzylinders 12 des Werkzeugsystemmoduls 2 bereitgestellt. Die Zentrierfläche 10 geht über eine Einkerbung in einen balligen Endabschnitt 412 über, der bevorzugterweise sphärisch ausgebildet ist, wobei der Durchmesser der den Abschnitt 412 einhüllenden Kugel geringfügig, beispielsweise einige 1/100 mm kleiner ist als der Innendurchmesser der Gegen-Passungsfläche am werkzeugmaschinenseitigen Kupplungsteil 4.

Die Mitnahme zwischen den Teilen 4 und 2 in Umfangsrichtung erfolgt über ein Paar von diametral angeordneten Mitnehmerkörpern bzw. Mitnehmersteinen 550, die in einer Radialnut 552 der Spindel 4 aufgenommen und dort verschraubt sind. In den Mitnehmerkörpern 550 sind radial außen Schlitze 554 ausgebildet, durch die sich der Schaft der betreffenden Befestigungsschraube 556 erstreckt. Mit den radial innen liegenden Bereichen greifen die Mitnehmerkörper 550 in nicht näher bezeichnete Mitnahmenuten im Zentrierzylinder 12 ein. Die Mitnehmerkörper 550 erstrecken sich dabei ebenfalls durch einen Axialfortsatz 562 eines Zentrierrings 560, der als Verschleißring dient und zu diesem Zweck aus verschleißfestem Material, beispielsweise aus Hartmetall, ausgebildet sein kann. Der Zentrierring 560 ist fest mit der Spindel verschraubt und bildet die vorstehend beschriebenen, erhabenen Radialringflächensegmente 14A aus, gegen die die Radialringfläche 8 des Werkzeugsystemmoduls 2 gepreßt wird. In Fluchtung mit den Befestigungsschrauben 556 weist der Zentrierring 560 Gewindebohrungen 564 auf, die mittels Madenschrauben 566 verschließbar sind. Diese Konstruktion ermöglicht es, bei abgenommenem Werkzeugsystemmodul 2 und herausgenommener Madenschraube 566 die Mitnehmersteine 550 auszuwechseln, ohne dazu den Zentrierring 560 abnehmen zu müssen.

Mit 526 ist wiederum ein elastischer Ring beispielsweise in der Form einer Wurmfeder bezeichnet, mit dem die Klauenabschnitte 426 radial nach innen vorgespannt werden.

Man erkennt aus der Darstellung gemäß Fig. 19, daß ein Spülkanalsystem zur Reinigung der in Eingriff bringbaren Funktionsoberflächen an den zu kuppelnden Bestandteilen der Kupplungsvorrichtung ausgebildet ist. Zu diesem Zweck ist ein Radialkanal 570 zwischen Mitnehmerstein 550 und Zentrierzylinder 12 einerseits sowie einem Durchbruch im Zentrierring 560 andererseits ausgebildet. Dieser Radialkanal mündet in einem Ringraum 572 (Fig. 19C und 19D), von dem mehrere Stichkanäle 574 zu den Radialringflächensegmenten 14A ausgehen. Ferner sind zusätzliche Leckölbohrungen 576 zu Taschen zwischen den Radialringflächensegmenten 14A geführt.

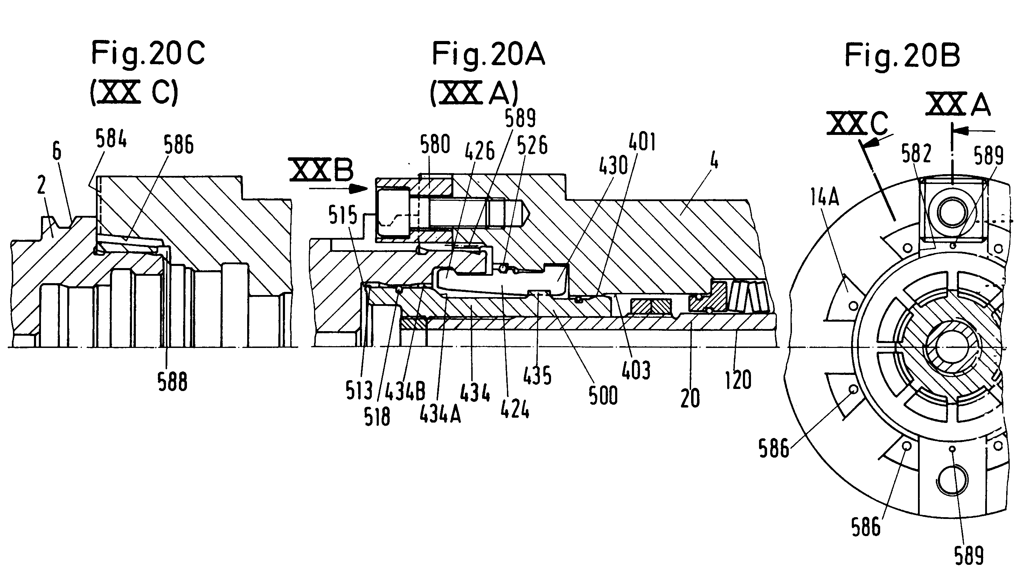

In Fig 20 ist eine weitere Ausführungsform der Kupplungsvorrichtung beschrieben, die sich von der zuvor beschriebenen Ausführungsform gemäß Fig. 19 lediglich dadurch unterscheidet, daß die Mitnahme zwischen Spindel 4 und Werkzeugsystemmodul 2 in einem radial weiter außen liegenden Bereich erfolgt, wobei kein zusätzlicher Zentrierring vorgesehen ist. Hinsichtlich der mit der Ausführungsform gemäß Fig. 19 übereinstimmenden Teile wird auf die vorstehende Beschreibung verwiesen. Identische Funktionsteile sind - wie auch im folgenden - mit gleichen Bezugszeichen versehen.

Zur Mitnahme zwischen den Teilen 2 und 4 sind auf Seiten der Spindel 4 Nutensteine 580 vorgesehen, die in Radialnuten 582 einer Passungs-Stirnfläche 584 aufgenommen und dort verschraubt sind. Diese Nutensteine können so ausgebildet sein, wie dies bei Steilkegelkupplungen gemäß DIN 2080 oder DIN 69871 der Fall ist. Die Passungs-Stirnfläche 584 weist wiederum erhabene Radialringflächensegmente 14A auf, an denen der Radialflansch des Werkzeugsystemmoduls 2 anliegt. Mit 586 sind Stichkanäle bezeichnet, die von den Radialringflächensegmenten 14A ausgehen und zu einem Ringraum 588 führen, der mit einem Spül-Druckmittel speisbar ist. Von diesem Ringraum 588 gehen ferner radial innerhalb der Nutensteine 580 weitere Kanäle 589 aus, die einen Austritt für Lecköl bereitstellen und über die eine Luftstauentlüftung stattfinden kann.

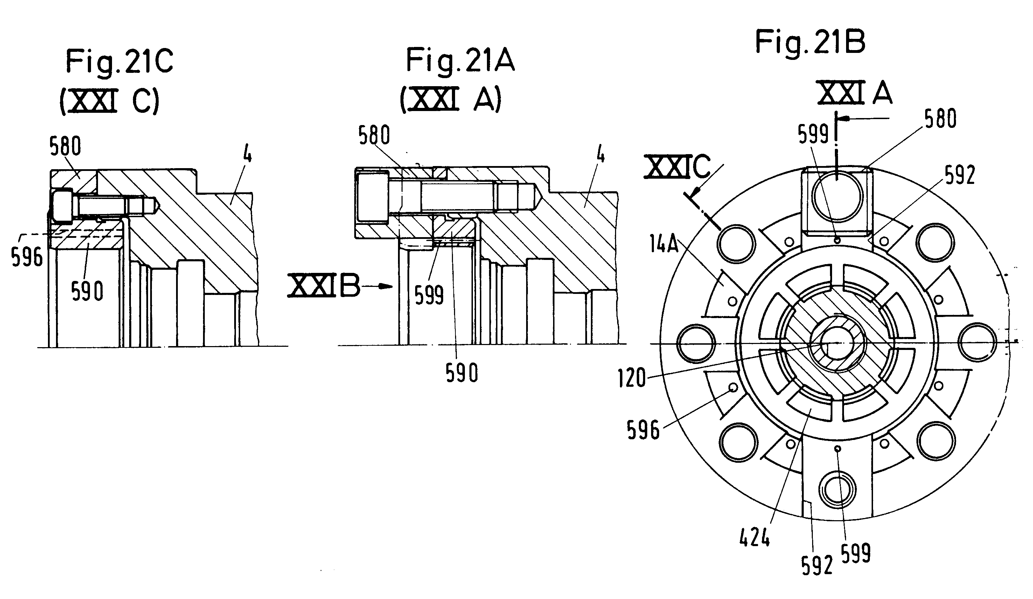

Die Ausführungsform gemäß Fig. 21 unterscheidet sich von derjenigen gemäß Fig. 20 im Grunde genommen lediglich darin, daß zwischen Nutenstein 580 und Spindel 4 ein zusätzlicher Zentrierring 590 eingegliedert ist. In der Stirnseite des Zentrierrings sind Radialnuten 592 zur Aufnahme der Nutensteine 580 ausgebildet. Mit 596 sind Druckluft-Spülkanäle bezeichnet, die sich im wesentlichen axial durch den Zentrierring 590 erstrecken und im Bereich der Radialringflächensegmente 14A des Zentrierrings 590 austreten. Mit 599 sind Kanäle bezeichnet, die den Kanälen 589 der Ausführungsform gemäß Fig 20 entsprechen.

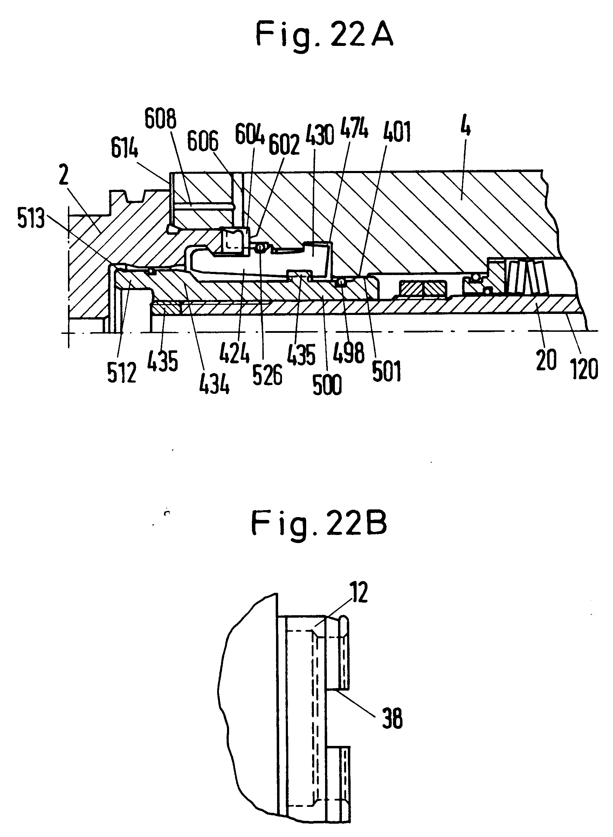

Bei der Ausführungsform gemäß Fig. 22 erfolgt die Mitnahme zwischen Spindel 4 und Werkzeugsystemmodul 2 über Ausnehmungen 38 im Bereich der Stirnseite des Zentrierzylinders 12. Zur Mitnahme sind an einer Schulter 602 der Spindel 4 Mitnehmerkörper 604 befestigt, die mit Passung in die Mitnahmenuten 38 des Zentrierzylinders 12 eingreifen. Von der Schulter 602 gehen mehrere Radialbohrungen 606 aus, von denen Stichkanäle 608 zu nicht näher dargestellten Radialringflächensegmenten der Stirnseite 614 der Spindel 4 geführt sind, um das Druckmittelspülsystem zur Reinigung der Funktionsflächen der Kupplungsvorrichtung auszubilden. Von den Radialbohrungen 606 ist lediglich eine außen zur Druckmittelzufuhr geöffnet

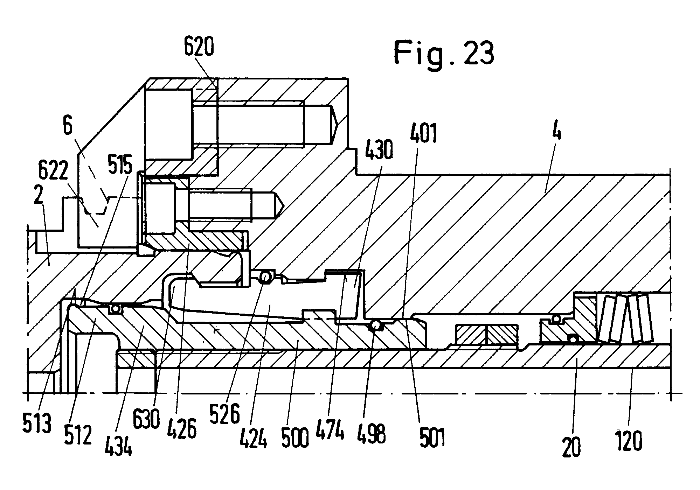

Bei der Ausführungsform gemäß Fig. 23 erfolgt die Mitnahme in Drehrichtung zwischen Spindel 4 und Werkzeugsystemmodul 2 durch einen Mitnehmerring 620, der zumindest zwei radial nach innen weisende Mitnehmernasen 622 aufweist, die in entsprechend geformte Nuten am Anschlußflansch des Werkzeugsystemmoduls 2 eingreifen. Die Zentrierung erfolgt unter Zuhilfenahme eines Zentrierrings 630, der von den Mitnehmernasen 622 übergriffen wird. Anstelle eines Rings können auch zwei hakenförmige Mitnehmersteine vorgesehen sein.

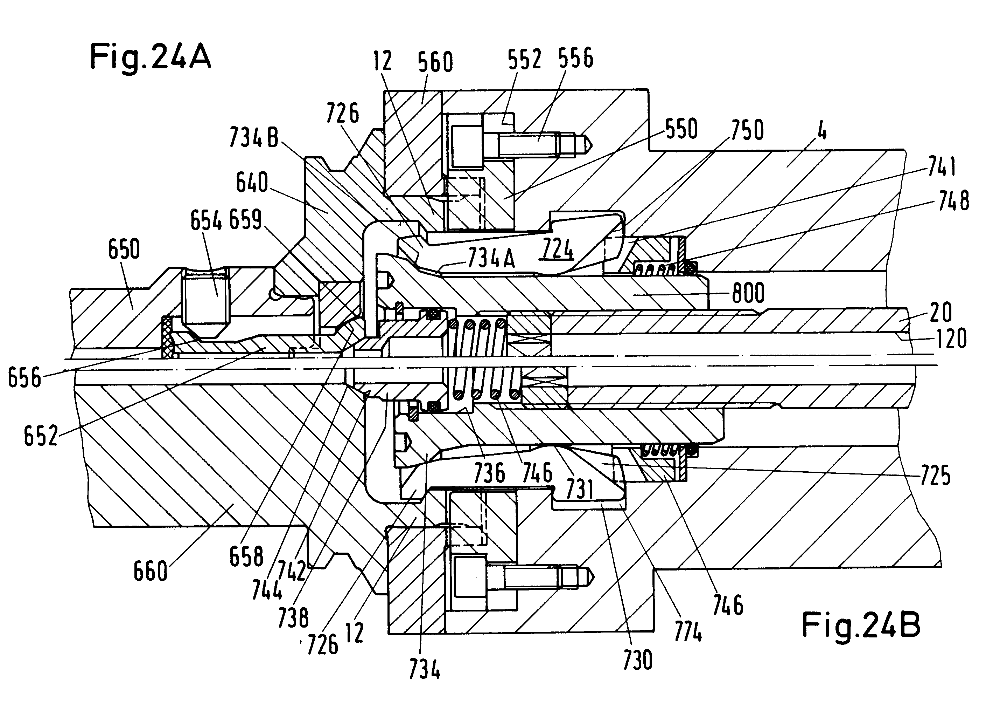

Die Ausführungsform gemäß Fig. 24A bzw. 24B entspricht hinsichtlich der Mitnahme zwischen den zu koppelnden Teilen in Umfangsrichtung im wesentlichen der Ausführungsform gemäß Fig 19. Vergleichbare Teile sind diesbezüglich mit identischen Bezugszeichen wie in Fig. 19 versehen. Auch bei dieser Ausführungsform sind Mitnehmersteine 550 austauschbar mittels Befestigungsschrauben 556 in einer Nut 552 des Anschlußflanschs der Spindel 4 befestigt. Über den Zentrierring 560, der wiederum aus verschleißfestem Material hergestellt sein kann, erfolgt eine verlängerte Vorzentrierung des Zentrierzylinders 12.

Bei der Ausführungsform gemäß Fig. 24A ist der Zentrierzylinder 12 an einem Grundaufnahmeteil 640 für ein Modularwerkzeug 650 ausgebildet, wohingegen bei der Ausführungsform gemäß Fig. 24B der Zentrierzylinder 12 Bestandteil eines Massivwerkzeugs 660 ist. Das Modularwerkzeug 650 ist unter Zuhilfenahme eines Pendelzapfens 652 gegen das Grundaufnahmeteil 640 spannbar, indem eine Befestigungsschraube 654 in Preßkontakt mit einer Keilfläche 656 des Pendelzapfens 652 gebracht wird, der sich über eine Kugelfläche 658 an einem Konus 659 abstützt.

Abweichend von den zuvor beschriebenen Ausführungsbeispielen erfolgt bei den in Fig. 24 gezeigten Ausführungsformen keine doppelte Vorzentrierung. Abweichend ist auch die Gestaltung des Schubkonusteils und der Spannelemente, worauf nachfolgend näher eingegangen werden soll.

Das mit 734 bezeichnete Schubkonusteil weist radial innerhalb der Funktionsflächen 734A und 734B eine zylinderförmige Ausnehmung 736 auf, in der abdichtend ein Hohlkolben 738 geführt ist, der mittels einer Feder 740 ständig mit seiner sphärischen Dichtfläche 742 gegen einen Konus 744 entweder im Pendelzapfen 652 oder im Massivwerkzeug 660 gedrückt wird. Diese Gestaltung erlaubt eine zentrische Schmiermittelversorgung des Werkzeugsystemmoduls durch das Innere der Betätigungsstange 20.

Anstelle des bei den zuvor beschriebenen Ausführungsbeispielen vorgesehenen elastischen Rings 26, 126 bzw. 526 erfolgt bei den Ausführungsformen gemäß Fig. 24A und 24B eine Zwangs-Bewegungssteuerung der mit 724 bezeichneten Spannelemente, um dafür zu sorgen, daß sich die Klauenabschnitte 726 bei Verschiebung der Betätigungsstange 20 nach links, d.h. beim Lösen der Kupplungsvorrichtung, zuverlässig außer Eingriff mit der nutartigen Ausnehmung 36 im Zentrierzylinder 12 bewegen. Zu diesem Zweck ist auf der dem Werkzeugsystemmodul 2 abgewandten Seite eines Kopplungsansatzes 800 des Schubkonusteils 734 ein Stabilisierungskörper 746 geführt, der mittels einer Feder 748 gegen eine rückwärtige schräge Steuerfläche 750 der Spannelemente 724 drückbar ist. Die Spannelemente 724 stützen sich mit ihren hakenförmigen Endabschnitten 730 in einer Stütznut 774 der Spindel 4 und mit einem balligen Abschnitt 731 auf dem Kopplungsansatz 800 ab. Im Stabilisierungskörper sind eine der Anzahl der Spannelemente 724 entsprechende Anzahl von Schlitzen 747 ausgebildet, in die mit Passung endseitige Führungsrippen 725 der Spannelemente 724 eingreifen. Man erkennt aus der Darstellung gemäß Fig. 24A und 24B, daß durch Verschiebung der Betätigungsstange 20 und damit des Schubkonusteils 734 nach links (Fig. 24A) unter Einwirkung des federbeaufschlagten Stabilisierungskörpers 746 ein Nachuntenschwenken des Klauenabschnitts 726 erfolgt.

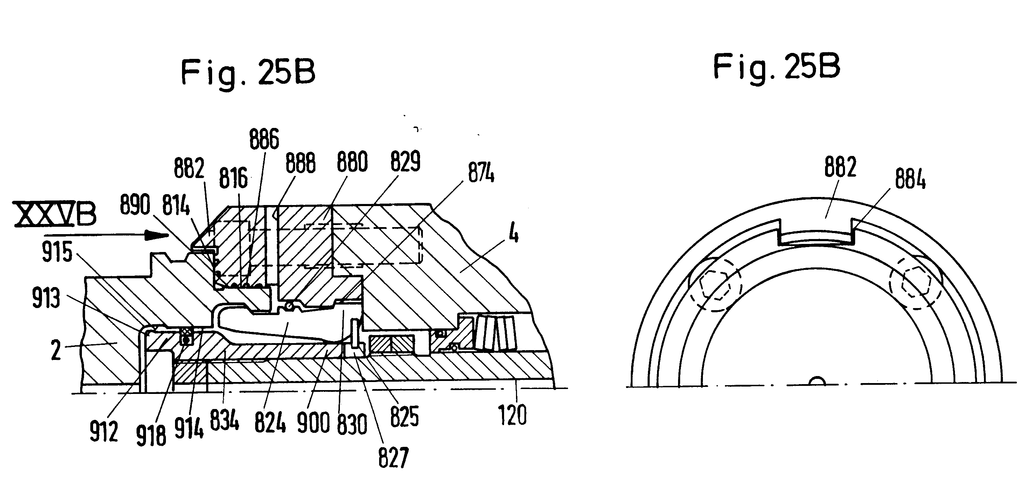

Eine weitere Ausführungsform ist in Fig. 25 dargestellt. Bei dieser Ausführungsform ist eine Stütznut 874 für die hakenförmigen Endabschnitte 830 von Spannelementen 824 zwischen der Spindel 4 und einem Vorsatzflansch 880 ausgebildet, der mit Mitnehmernasen 882 in entsprechende Ausnehmungen 884 des Werkzeugsystemmoduls 2 eingreift. Das Schubkonusteil ist auf der linken Endseite entsprechend den Ausführungsformen gemäß Fig. 19 bis 23 ausgebildet, so daß eine Vorzentrierung des anzukoppelnden Werkzeugsystemmoduls erfolgen kann.

Zur Ausbildung eines gleichzeitig zur Entlüftung dienenden Spülkanalsystems ist im Vorsatzflansch 880 im Bereich der zylindrischen Passungsfläche eine wendelförmige Nut 886 ausgebildet, die über eine Luftkanalbohrung 888 speisbar ist. Die wendelförmige Nut 886 steht in kommunizierender Verbindung mit einer spiralförmigen Nut 890 in der Planfläche 814 des Vorsatzflansches 880, so daß über die Luftkanalbohrung 888 und die Nuten 886 und 890 zumindest ein Reinigungskanal ausgebildet wird.

Abweichend von den zuvor beschriebenen Ausführungsformen erfolgt bei der Ausführungsform gemäß Fig. 25 eine Stabilisierung der Spannelemente 824 über einen endseitig angebrachten Positionierungsstift 825, der mit Passung in einen Axialschlitz 827 am Kopplungsansatz 900 des Schubkonusteils 834 vorgesehen ist. Mit 829 ist ein elastischer Ring bezeichneten durch den die Radialvorspannung der Spannelemente 824 erfolgt.

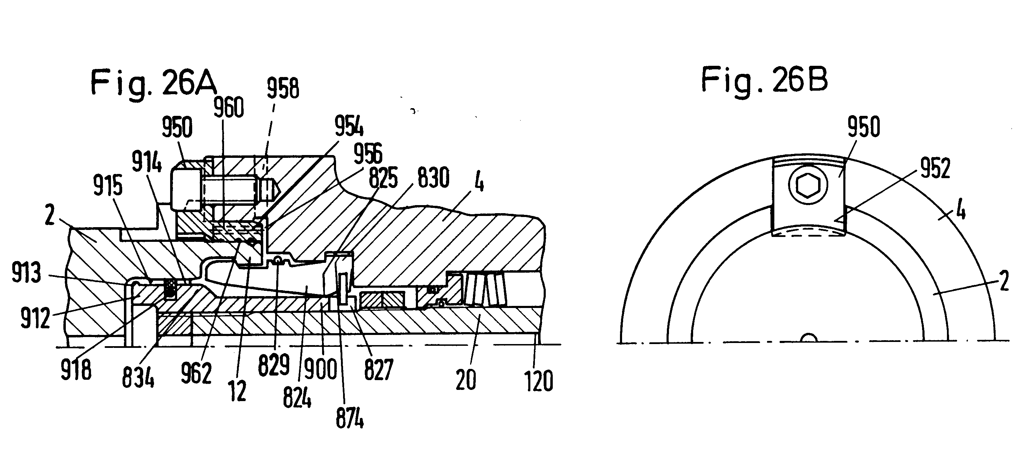

Die Ausführungsform gemäß Fig. 26 unterscheidet sich von der Ausführungsform gemäß Fig. 25 lediglich in der Ausgestaltung der Einrichtung für die Mitnahme in Umfangsrichtung. Bei dieser Ausführungsform liegt der Werkzeugsystemmodul 2 direkt an der Spindel 4 an. Die Mitnahme 80 erfolgt über Mitnehmerkörper 950, für die im Werkzeugsystemmodul 2 eine Ausnehmung 952 vorgesehen ist und die einstückig mit einem Zentrierzylinderabschnitt 954 ausgebildet sind. Mit diesem Zentrierzylinderabschnitt steht der Zentrierzylinder 12 in Passungseingriff. Von einem Ringraum 956, der über zumindest eine Radialbohrung 958 mit Reinigungsdruckluft gespeist wird, gehen Stichkanäle 960 aus, die - wie vorstehend mehrfach beschrieben - an den zu reinigenden Passungsflächen zwischen den Komponenten 2 und 4 austreten.

Die Reinigung der zylindrischen Passungsflächen zwischen Zentrierzylinder 12 und Zentrierzylinderabschnitt 954 erfolgt durch eine wendelförmige Nut 962 im Zentrierzylinderabschnitt 954.

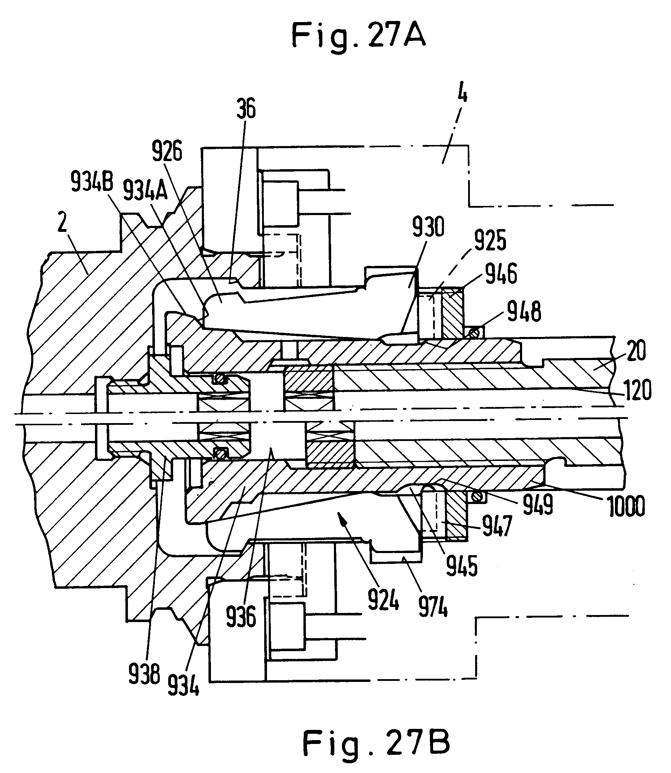

Schließlich soll noch auf die Ausführungsform gemäß Fig. 27 Bezug genommen werden, die hinsichtlich der Mitnahme zwischen den zu koppelnden Teilen in Umfangsrichtung mit der Ausführungsform gemäß Fig. 24 übereinstimmt. Unterschiedlich ist jedoch die Gestaltung der Spannelemente 924, und der hierfür vorgesehenen Stabilisierungseinrichtung sowie die Ausbildung des zentralen Schmiermittelversorgungskanals.

Mit 934 ist ein Schubkonusteil bezeichnet, das wiederum mit einem Kopplungsansatz 1000 mit der hohlen Betätigungsstange 20 verbunden ist. Das Schubkonusteil 934 hat auf der dem Werkzeugsystemmodul 2 zugewandten Seite eine Passungsbohrung 936, in den abdichtend ein Hohlzapfen 938 einführbar ist, der am Werkzeugsystemmodul 2 befestigt ist.

Die Spannelemente 924 stützen sich mit ihren hakenförmigen Endabschnitten 930 in einer Stütznut 974 der Werkzeugmaschinenspindel 4 ab. Auf der den Klauenabschnitten 926 abgewandten Seite der Spannelemente 924 sind Führungsrippen 925 ausgebildet, die mit Passung in Schlitze 947 eines Stabilisierungskörpers 946 eingreifen. Im Bereich der Führungsrippen 925 ist auf der Außenseite des Kopplungsansatzes 1000 eine Nockenfläche 948 ausgebildet, an der ein Steuerabschnitt 949 der Führungsrippen 925 entlang gleiten kann. Im Kopplungszustand ist der Steuerabschnitt 949 in einer Ausnehmung 945 des Kopplungsansatzes 1000 vollkommen aufgenommen (siehe Fig. 27B) Wenn die Betätigungsstange 20 gemäß Fig. 27A nach links bewegt wird, gelangt die Nockenfläche 948 in Funktionseingriff mit dem Steuerabschnitt 949, wodurch die Klauenabschnitte 926 aus der nutartigen Ausnehmung 36 zwangsweise herausgeschwenkt werden.

Selbstverständlich sind weitere Abwandlungen der Kupplungsvorrichtung möglich. So sind insbesondere Kombinationen von Einzelheiten der vorstehend beschriebenen Ausführungsformen miteinander möglich. Es ist insbesondere möglich, die Vorzentrierung der Ausführungsformen gemäß Fig. 19 bis 23 vorzusehen, ohne dabei gleichzeitig den hohlzylindrischen Fortsatz zur Abdichtung des Kühlmittelversorgungskanals heranzuziehen. Vielmehr kann statt dieser Abdichtung gemäß Fig 19 bis 23 auch ein Kühlmittelübergabebolzen gemäß Fig. 13 vorgesehen sein.

Die Mitnahme der zu koppelnden Teile in Umfangsrichtung kann auch dadurch erfolgen bzw. verbessert werden, daß die sich gegenüberliegenden Planflächen über eine Stirnverzahnung in Eingriff stehen, die entweder zentrierend oder nicht selbstzentrierend ausgebildet sein kann. Eine derartige Stirnverzahnung kann an den sich berührenden Radial-Passungsflächen und/oder an den sich lediglich gegenüberliegenden Radialflächen vorgesehen sein, wobei auch Verzahnungs-Zwischenringe Verwendung finden können.

Abweichend von den zuvor beschriebenen Ausführungsbeispielen ist es auch möglich, das Spülkanalsystem mit anderen Medien als mit Druckluft zu spülen. Der Fortsatz 12, 12′ am werkzeugsystemmodulseitigen Teil der Kupplungsvorrichtung ist auch nicht auf eine Gestaltung beschränkt, bei der ausschließlich zylindrische Fassungsflächen vorgesehen sind. Möglich ist es auch, in diesem Bereich mit Konusflächen zu arbeiten. Schließlich ist es auch möglich, im Bereich des Eingriffs des Fortsatzes mit einer formschlüssigen Verbindung zum Gegenstück am werkzeugmaschinenseitigen Kupplungsteil zu arbeiten. Hier ist als Querschnittsform der miteinander in Eingriff stehenden Teile jede vom Kreisquerschnitt abweichende Querschnittsgestaltung möglich.

Der vorstehend als Schubkonus bezeichnete Betätigungskörper für die Spannelemente kann selbstverständlich auch eine von den dargestellten Ausführungsbeispielen abweichende Formgebung haben. Anstelle der kegeligen Betätigungsflächen am Schubkonus kann auch eine andere, geeignete Kurvenfläche Anwendung finden, die entweder direkt mit den Kontaktflächen an den Spannelementen oder indirekt unter Zwischenschaltung eines geeigneten anderen Stellkörpers auf die Spannelemente einwirkt. Auf diese Weise kann eine beliebige Steuerung des Stellwegs für die Spannelemente erreicht werden, so daß beispielsweise zu Beginn des Rückhubs der Betätigungsstange ein verhältnismäßig schnelles Nachaußenschwenken der Klauenabschnitte erfolgt, wonach über einen flacheren Anstieg der Kontaktflächenpaarung ein verändertes, im Hinblick auf eine hohe Anpreßkrafterzeugung abgestelltes Bewegungsverhältnis vorliegt.

Anstelle der Variante, wonach der Kühlmittelübertragungskörper fest mit dem werkzeugsystemmodulseitigen Kupplungsteil verbunden ist, ist es selbstverständlich auch möglich, einen derartigen Kühlmittelübertragungskörper fest mit dem Schubkörper zu verbinden, wobei dann der Kühlmittelübertragungskörper abdichtend in eine entsprechend ausgebildete Innenausnehmung auf Seiten des Werkzeugsystemmoduls eingreift.

Der Kontaktflächenabschnitt des Kühlmittelübertragungskörpers ist selbstverständlich auch nicht auf eine sphärische, d. h. kugelförmige Außenoberfläche beschränkt. Es sind auch andere Flächengestaltungen, beispielsweise die Ausbildung einer Konusfläche denkbar, wobei es vorteilhaft sein kann, im Bereich der Dichtungskontaktflächen mit zusätzlichen Dichtungseinrichtungen, beispielsweise einem O-Ring zu arbeiten.

Anstelle der Verwendung eines Zentrierrings bzw. Vorsatzflanschs aus verschleißfestem Material ist es auch denkbar, diese Komponenten lediglich im Bereich der Funktionsoberflächen mit verschleißfesten Beschichtungen zu versehen. Für den Fall, daß mit derartigen verschleißfesten Beschichtungen gearbeitet wird, kann sich in verschiedenen Fällen auch ein gesonderter Zentrierring erübrigen.

Im folgenden sollen noch einmal diejenigen, zur Erfindung gehörigen Merkmale übersichtlich dargestellt werden, die in Verbindung mit dem Kern der Erfindng, wie er im Hauptanspruch zum Ausdruck kommt, für sich und in Verbindung untereinander besonders vorteilhaft sind. Vorteilhaft und zweckmäßig ist es, wenn:

- der Fortsatz von einem Zentrierzylinder (12; 12') gebildet ist, für den werkzeugmaschinenseitig eine Zentrieraufnahme (18) einer Spindel (4; 4') vorgesehen ist, und daß auf Seiten des den Zentrierzylinder (12) tragenden Werkzeugsystemmoduls (2; 2') zumindest eine Ausnehmung (38) für zumindest eine an der Aufnahme (18) vorgesehene Mitnehmerklaue (42; 550; 580; 604; 622; 882; 950) vorgesehen ist;
- die Planflächen (8, 14) über die die zu kuppelnden Teile aneinander preßbar sind, von Radialringflächen (14; 14A) gebildet sind;
- das Keilgetriebe (22) einen radial innerhalb der Klauenabschnitte (26; 426; 726; 826; 926) liegenden und mit der Betätigungsstange (20) verbundenen Schubkörper (34; 434; 734; 834; 934) aufweist, der mit angepaßten Kontaktflächen (92) der Spannklauen in Berührungseingriff bringbar ist;
- der Schubkörper (34; 434; 734; 834; 934) am dem Werkzeugsystemmodul (2; 2') zugewandten Ende der Betätigungsstange (20) angebracht ist, deren zum Lösen der Kupplung vorgesehener Hub an das Eintauchmaß der Klauenabschnitte (26; 426; 726; 826; 926) in die nutartige Ausnehmung (36) und an die Keilwinkelgestaltung (434A, 434B) des Schubkonus angepaßt ist;
- die Betätigungsstange (20) zumindest beim Spannvorgang (20) ein radiales Spiel im werkzeugmaschinenseitigen Kupplungsteil (4; 4') hat;
- die klammerartigen Spannklauen (24; 424; 724; 824; 924) mit ihren dem Klauenabschnitt entgegengesetzten Endabschnitten (30; 430; 730; 830; 930) in eine Stütznut (74; 474; 774; 874; 974) der Aufnahme (18) eingreifen, wobei die Stütznut derart an die Gestaltung der Endabschnitte angepaßt ist, daß die Spannklauen unter Beibehaltung des Eingriffs in die Stütznut mit ihren Klauenabschnitten in die nutartige Ausnehmung (36) des Zentrierzylinders (12; 12') und aus dieser heraus schwenkbar sind;
- der Schubkörper (34; 434; 734; 834; 934) auf der dem Werkzeugsystemmodul (2; 2') abgewandten Seite einen zylinderförmigen Kopplungsansatz (100; 500; 800; 900; 1000) hat, über den er mit der Betätigungsstange (20) verbindbar, vorzugsweise verschraubbar ist;

- der Schubkörper (34; 434; 834) auf der der Betätigungsstange (20) abgewandten Seite einen hohlzylinderförmigen Fortsatz (112; 512, 912) trägt, der abdichtend in eine koaxiale Ausnehmung (114; 514, 515; 914, 915) im Werkzeugsystemmodul (2) einführbar ist;
- die Betätigungsstange (20) eine durchgehende Längsbohrung (120) hat;
- die nutartige Ausnehmung (36) im Fortsatz (12; 12') von einer Ringnut mit V-Querschnitt gebildet ist;
- sich die Spannklauen (24; 424; 724; 824; 924) im gekuppelten Zustand flächig an einer Flanke der nutartigen Ausnehmung (36) im Fortsatz (12; 12') anlegen;
- sich die Spannklauen (24; 424; 724; 824; 924) im gekuppelten Zustand flächig an einer Flanke (76) der Stütznut (74; 47; 774; 874, 974) anlegen;
- die Zentrieraufnahme (18) im Eingriffsbereich des Zentrierzylinders (12', 12) von einem Zentrierring (140; 560; 590; 630; 880; 960) gebildet ist, der gegebenenfalls radial einstellbar an der Spindel (4', 4) festgelegt ist;
- der Zentrierring (140; 560; 590; 630; 880; 960) aus verschleißfestem Werkstoff, wie z.B. Hartmetall oder gehärtetem Stahl besteht;
- die Spannklauen (24; 424; 724; 824; 924) durch radiales Zertrennen eines hülsenförmigen Körpers (78) hergestellt sind, der an seinen Stirnseiten radial nach außen vorstehende Ringwulste (26, 30) ausbildet;
- ein vorzugsweise von Druckluft versorgtes Spülkanalsystem (300 bis 326; 570 bis 576; 586 bis 589; 596, 599; 604 bis 608; 886 bis 890; 956 bis 960) zur Reinigung der in Eingriff bringbaren Funktionsoberflächen an den zu kuppelnden Bestandteilen der Kupplungsvorrichtung;
- die Planflächen über die die zu kuppelnden Teile aneinander preßbar sind, auf Seiten des Werkzeugsystemmoduls von einer Radialringfläche (8) und auf Seiten der Spindel (4) von Radialringflächensegmenten (14A) oder -abschnitten gebildet sind, die vorzugsweise durch diametral verlaufende Nuten (324) voneinander getrennt sind und jeweils zumindest eine Mündungsöffnung (322) von Druckluft-Spülkanälen (320; 574; 586; 596; 608; 960) aufweisen;
- die Stütznut (74) in einem in der Zentrieraufnahme (18) eingesetzten, die Umfangskräfte auf das Werkzeugsystemmodul (2; 2') übertragenden Mitnahmering (44) ausgebildet ist;
- der Mitnahmering (44) die zumindest eine Mitnehmerklaue (42) trägt, für die in der Stirnseite des Zentrierzylinders (12) eine Ausnehmung (38) vorgesehen ist;

- die Zentrieraufnahme (18) über eine Radialschulter (50) in eine Vertiefung (54) übergeht, in die zur Schaffung einer drehfesten Verbindung zwischen Werkzeugmaschinenspindel (4; 4′) und Mitnahmering (44) ein entsprechend gestalteter Mitnahmefortsatz (52) des Mitnahmerings (44) formschlüssig eingreift;
- der Mitnahmefortsatz (52) prismenartig mit vorzugsweise konvex gewölbten Außenflächen (56) gestaltet ist;
- der Mitnahmefortsatz (52) im wesentlichen K-Profil hat;
- der Mitnahmering (44) zwei diametral angeordnete Mitnehmerklauen (42) trägt, deren Symmetrieebene ($E_S$) mit einer der drei Axialebenen ($E_A$) durch die Kanten (130) des Mitnahmefortsatzes (52) einen Winkel von 30° einschließt,
- die Spannklauen (24) in radialer Richtung in Axialnuten (70) eines Führungskörpers (64) geführt sind, der mit dem werkzeugmaschinenseitigen Teil der Kupplungsvorrichtung fest verbindbar ist;
- der Führungskörper (64) den Mitnahmering (44) gegen die Radialschulter (50) in der Zentrieraufnahme (18) drückt;
- der Mitnahmering (44) im Bereich des Mitnahmefortsatzes (52) mit dem Führungskörper (64) einen zu den Spannklauen (24) abgedichteten mit Druckluft versorgbaren Ringraum (314) definiert, von dem vorzugsweise drei im Umfang gleichmäßig verteilte Stichkanäle (314) nach außen laufen, die in jeweils einer Längsnut (316) auf der Außenseite des Mitnahmerings (44) münden, die mit einem Ringraum (318) zur Versorgung der Druckluft-Spülkanäle (320) in Strömungsverbindung stehen;
- der Führungskörper (64) in den werkzeugmaschinenseiten Teil (4; 4′) der Kupplung schraubbar ist;
- der Führungskörper (64) im Bereich des Gewindes zumindest eine im wesentlichen in Axialrichtung verlaufende Kerbe (308) zur Versorgung des Ringraums (314) mit Druckluft hat;
- der Schubkonus (34) auf der dem Werkzeugsystemmodul (2) abgewandten Seite einen zylinderförmigen Kopplungsansatz (100) hat, über den er mit der Betätigungsstange (20) verbindbar, vorzugsweise verschraubbar ist und daß der Kopplungsansatz (100) auf seiner Außenseite Längsausnehmungen (306) hat, um zwischen ihm und der zylindrischen Innenoberfläche des Führungskörpers (64) einen weiteren Spülkanal zu definieren, der über einen Zwischenaum (304) zwischen Zugstange (20) und Führungskörper (64) gespeist und zu den Klauenabschnitten (26) der Spannklauen (24) hin offen ist;
- die jeweiligen Längsnuten (316) im Mitnahmering (44) radial innerhalb des Ringraums (318) auslaufen und in einen zur zylindrischen Passungsfläche (16) hin offenen, vorzugsweise umlaufenden Ringspalt (326) übergehen;
- die zumindest eine Längskerbe (308) und der Zwischenraum (304) zwischen Zugstange (20) und Führungskörper (64) von einem gemeinsamen Druckluft-Versorgungsraum (302) ausgehen, der über einen Ringkanal (300) zwischen Zugstange (20) und Spindel (4) mit Druckluft versorgt ist;
- die zylindrische Innenoberfläche des Führungskörpers (64) eine Ringnut (96) zur Aufnahme eines in radialer Richtung elastischen Ringes (98) hat, über den der Schubkonus (34) radial stabilisierbar ist;
- der Schubkonus (34′; 934) eine axiale, zentrische Bohrung (144; 936) aufweist, in die beim Kupplungsvorgang abdichtend ein koaxial im Werkzeugsystemmodul (2′; 2) befestigter Hohlzapfen (112′; 938) einführbar ist;
- der Klauenabschnitt (26) an seiner Außenseite eine zum Werkzeugsystemmodul (2; 2′) hin abfallende Keilflanke (84) aufweist;
- die Spannklauen (24; 424; 824) von einem elastischen Ring (118; 118′; 526; 829) nach innen vorgespannt sind, wobei der Ring vorzugsweise in einer dem Klauenabschnitt (26) benachbarten Rille (128) aufgenommen ist;
- die Stütznut (474; 774; 874; 974) in einer Werkzeugmaschinenspindel (4) ausgebildet ist;
- die Stütznut (874) von einer Werkzeugmaschinenspindel (4) mit einem Vorsatzflansch (880) definiert ist;
- zur Mitnahme zwischen den zu kuppelnden Teilen (2; 4) zumindest zwei, vorzugsweise diametral gegenüberliegende Mitnehmerklauen (550; 580; 604; 622; 882; 950) vorgesehen sind, die in Passungs-Funktionseingriff mit entsprechend ausgebildeten Ausnehmungen (38) im jeweils anderen Kupplungsteil bringbar sind;
- eine Stirnverzahnung zwischen sich gegenüberliegenden Radialflächen der zu koppelnden Teile (2; 4);
- die Mitnehmerklauen (550; 580; 604; 622; 882; 950) am werkzeugmaschinenseitigen Kupplungsteil (4;) vorgesehen sind;
- die Mitnehmerklauen (550; 604) mit Ausnehmungen (38) in die Stirnseite des Zentrierzylinders (12) zusammenwirken;
- die Mitnehmerklauen zwei in Radialnuten (552;) der Werkzeugmaschinen-Spindel (4) aufgenommene und vorzugsweise darin verschraubbare Mitnehmersteine (550) aufweisen, die sich durch entsprechende, vorzugsweise stirnseitige Ausnehmungen (571) eines Zentrierringes (560) erstrecken, der an der Werkzeugmaschinen-Spindel (4) befestigt ist;

- im Zentrierring (560) Öffnungen (564) ausgebildet sind, durch die Befestigungsschrauben (556) der Mitnehmersteine (550) zugänglich sind;

- zwischen Zentrierring (560) und Mitnehmerstein (550) ein im wesentlichen radial verlaufender Spülkanal (510) ausgebildet ist, der in einen Ringraum (572) zwischen Zentrierring (560) und Werkzeugmaschinen-Spindel (4) mündet, von dem Stichkanäle (574) zu den zu reinigenden Radialringflächenabschnitten (14A) ausgehen;

- die Mitnehmerklauen (580; 622; 882; 950) mit Ausnehmungen (884) in einem Anschlußflansch für den Werkzeugsystemmodul zusammenwirken;

- die Mitnmehmerklauen zwei in Radialnuten (582) des Anschlußflansches der Werkzeugmaschinen-Spindel (4) aufgenommene und vorzugsweise darin verschraubbare Mitnehmersteine (580; 950) aufweisen;

- die Mitnehmersteine (950) einstückig mit einem Zentrierring (954) für den Zentrierzylinder (12) ausgebildet sind;

- die zylindrische Passungsfläche des Zentrierringes (954) eine wendelförmige Nut (962) zur Führung der Spülströmung und/oder einer Druckentlastungs- oder Entlüftungsströmung aufweist;

- die Mitnehmerklauen zwei in Radialnuten (592) eines am Anschlußflansch der Werkzeugmaschinen-Spindel (4) befestigten Zentrierringes (590) aufgenommene Mitnehmersteine (580) aufweisen;

- im Zentrierring (590) im wesentlichen axial verlaufende Spülkanäle (596) ausgebildet sind, die an Radialringflächensegmenten (14A) austreten, über die der flächige Anpreßkontakt zwischen den zu koppelnden Teilen erfolgt;

- die Mitnehmerklauen von radial nach innen vorstehenden Mitnehmernasen (882) eines Spindel-Vorsatzflansches (880) gebildet sind, an dem die Zentrierflächen (814; 816) für den anzukoppelnden Werkzeugsystemmodul (2) ausgebildet sind;

- in die Zentrierflächen (814; 816) miteinander kommunizierende Nuten (890; 886) eingearbeitet sind, um zumindest einen Strömungskanal für eine Spülströmung und/oder Entlastungsströmung auszubilden;

- die Mitnehmerkörper von radial nach innen weisenden Ansätzen (622) eines an der Werkzeugmaschinen-Spindel (4) befestigten Mitnehmerrings (620) gebildet sind, der mit seinen Ansätzen einen Zentrierring (630) übergreift;

- eine Vorzentrierungseinrichtung (412; 401, 501, 513, 514) für das anzukoppelnde Teil des Werkzeugsystemmoduls (2);

- die Vorzentrierungseinrichtung einen am Stirnende des Zentrierzylinders (12) und/oder am Schubkörper ausgebildeten balligen Oberflächenabschnitt (412, 513) aufweist, der vorzugsweise sphärisch mit einem Durchmesser ausgestaltet ist, der geringfügig kleiner ist als der Durchmesser der Zylinderpassungsflächen (10, 16; 514);

- die Vorzentrierungseinrichtung ein Paar von in Axialabstand stehenden Außenflächen (501, 513) eines mit der Betätigungsstange (20) verbundenen Konusteils (434, 500) aufweist, wobei die dem Werkzeugsystemmodul (2) abgewandte Außenfläche (501) ausschließlich dann in Passungseingriff mit einer Innenausnehmung (401) der Werkzeugmaschinen-Spindel (4) bringbar ist, wenn die Betätigungsstange (20) eine die Kupplung lösende Stellung einnimmt, und wobei die andere, die Zentrierhilfe bildende Außenfläche (513) während des Spannvorgangs außer Eingriff mit einer Innenzylinderfläche (514) des Werkzeugsystemmoduls (2) bleibt;

- der Kopplungsansatz (500; 800; 1000) des Schubkonus abgedichtet in einer Innenausnehmung der Werkzeugmaschinen-Spindel (4) geführt ist;

- der Kopplungsansatz (500; 800; 900; 1000) eine Einrichtung (435; 746; 827; 945; 948) zur seitlichen Stabilisierung der Spannklauen (424; 724; 824; 924) trägt;

- die Stabilisierungseinrichtung von im gleichmäßigen Umfangsabstand angeordneten Vorsprüngen (435) auf der Außenseite des Kopplungsansatzes (500) gebildet ist;

- die Stabilisierungseinrichtung von einer Vielzahl von Radialschlitzen (747; 827; 947) gebildet ist, in die mit Passung Führungsabschnitte (725; 825; 925) der Spannklauen eingreifen;

- die Radialschlitze (827) im Kopplungsansatz (900) ausgebildet sind;

- die Radialschlitze (747) in einem Druckkörper (746) ausgebildet sind, der über eine Federeinrichtung (748) gegen eine Steuerfläche (750) der Spannklauen drückt, um deren Klauenabschnitte im gelösten Zustand der Kupplungsvorrichtung aus der nutartigen Ausnehmung (36) zu schwenken;

- die Radialschlize in einem Stabilisierungskörper (946) ausgebildet sind, der sich hinter den Spannklauen (924) befindet und in den ein nockenartiger Fortsatz (925) der Spannklaue ragt, für den im Kopplungsansatz (1000) eine Steuerfläche (948, 945) vorgesehen ist, um im entkoppelten Zustand der Kupplungsvorrichtung ein Zwangsverschwenken der Klauenabschnitte (926) aus der nutartigen Ausnehmung zu bewirken;
- der Schubkörper (734; 934) auf der dem Werkzeugsystemmodul (2) zugewandten Seite eine Innenausnehmung (736; 936) hat, in der abgedichtet ein Kühlmittelübertragungskörper (738; 938) aufgenommen ist;
- der Kühlmittelübertragungskörper (938) fest mit dem werkzeugsystemmodulseitigen Kupplungsteil (2) verbunden, beispielsweise verschraubt ist;
- der Kühlmittelübertragungskörper von einem im Schubkonus geführten Hohlkolben (738) gebildet ist, der über eine Feder (740) in Richtung auf den Werkzeugsystemmodul (650; 660) zu gespannt ist;
- der Hohlkolben (738) eine vorzugsweise sphärische Dichtfläche (742) für den Anschluß an eine zentrale Kühlmittel-Bohrung im Bereich des Werkzeugsystemmoduls (2) aufweist;
- der hohlzylinderförmige Fortsatz (512; 912) endseitig eine Führungsnase (513; 913) hat, hinter der ein Dichtring (518; 918) angeordnet ist;
- am Schubkonus zwei im Winkel zueinander stehende Schubkonusflächen (434A; 434B) ausgebildet sind, von denen die vom Werkzeugsystemmodul (2) entferntere Schubkonusfläche (434A) einen größeren Winkel mit der Mittelachse der Kupplungsvorrichtung einschließt als die andere Schubkonusfläche (434B);
- der Zentrierring (560; 590; 630; 880, 950) aus verschleißfestem Material besteht;
- die Spannklauen (424; 824) von einem elastischen Ring (526; 829) radial nach innen vorgespannt sind;
- der Fortsatz (12; 12′) zylindrische Passungsflächen hat, insbesondere zylindrisch ausgebildet ist;
- der Fortsatz (12;) kegelig ausgebildete Passungsflächen hat, vorzugsweise als Konus ausgebildet ist;
- der Fortsatz (12) eine vom Kreis abweichende Querschnittsgestaltung hat, über die eine Mitnahme in Umfangsrichtung erfolgt.

Die Erfindung wurde anhand einer Schnittstelle zwischen Werkzeugsyystemmodul und einer Werkzeugmaschine beschrieben. In gleichermaßen vorteilhafter Weise läßt sich die Erfindung jedoch auch für eine Schnittstelle zwischen einem Werkstück, einem Werkstückträger, oder einem Werkzeugträger und einer dafür vorgesehenen Handhabungseinrichtung, wie z.B. einem Werkstück- oder Werkzeug-Wechsel-oder -Transportsystem anwenden, wobei sich insbesondere bei der Handhabung schwerer Systeme die Vorteile effektiv nutzen lassen.

Die Erfindung schafft somit eine Kupplungsvorrichtung zwischen einem Werkstück- oder Werkzeugträgerteil, wie z.B. einem Werkzeugsystemmodul, beispielsweise in Form einer Werkzeug-Grundaufnahme, und einer Handhabungseinrichtung, wie z.B. einer Werkzeugmaschine, insbesondere einer Spindel. Zum schnellen Herstellen und Lösen der Verbindung zwischen diesen Komponenten unter Bereitstellung großer Axialkräfte ist eine Spanneinrichtung mit einer Betätigungsstange vorgesehen, über die ein Keilgetriebe angesteuert ist, mit dem in dem einen zu koppelnden Teil vorgesehene Spannelemente im wesentlichen radial nach außen in eine entsprechend gestaltete Ausnehmung am anderen zu koppelnden Teil drückbar sind. Die Spannelemente sind von zumindest drei in gleichmäßigem Winkelabstand zueinander angeordneten, klammerartigen Spannklauen gebildet, die im wesentlichen parallel zu einem Zentrierfortsatz der Werkzeug-Grundaufnahme angeordnet und unter Abstützung in einer Zentrieraufnahme der Spindel mit einem im angekuppelten Zustand radial innerhalb des Zentrierfortsatzes liegenden Klauenabschnitt in eine nutartige Ausnehmung des Zentrierfortsatzes schwenkbar sind. Diese Kupplungseinrichtung zeichnet sich durch eine hohe Flexibilität hinsichtlich der Einsatzmöglichkeiten bei wirtschaftlicher Herstellbarkeit aus.

**Patentansprüche**

1. Kupplungsvorrichtung zwischen einem Werkstück- oder Werkzeugträgerteil, wie z. B. einem Werkzeugsystemmodul, beispielsweise in Form einer Werkzeug-Grundaufnahme, und einer Handhabungseinrichtung, wie z. B. einer Werkzeugmaschine, mit einer werkzeugmaschinenseitig vorgesehenen Aufnahme für einen Fortsatz des Werkzeugsystemmoduls und einer Spanneinrichtung zur Erzeugung einer Anpreßkraft zwischen Planflächen der zu kuppelnden Teile, wobei die Spanneinrichtung eine Betätigungsstange aufweist, über die ein Keilgetriebe betätigbar ist, mit dem zumindest drei in gleichmäßigem Umfangsabstand zueinander angeordnete, in dem einen zu koppelnden Teil vorgesehene Spannelemente im wesentlichen radial nach außen in eine entsprechend gestaltete Ausnehmung am anderen zu kuppelnden Teil drückbar sind, **dadurch gekennzeichnet,** daß die Spannelemente von klammerartigen Spannklauen (24; 424; 724; 824; 924) gebildet sind, die im wesentlichen parallel zum Fortsatz (12; 12') des Werkzeugsystemmoduls (2; 2') angeordnet und unter Abstützung in der Aufnahme (18) mit einem im angekuppelten Zustand radial innerhalb des Fortsatzes (12; 12') liegenden Klauenabschnitt (26; 426; 726; 826; 926) in eine nutartige Ausnehmung (36) des Fortsatzes (12; 12') drückbar sind, indem sie mit ihren dem Klauenabschnitt entgegengesetzten Endabschnitten (30; 430; 730; 830; 930) in eine Stütznut (74; 474; 774; 874; 974) der Aufnahme (18) eingreifen.

2. Kupplungsvorrichtung nach Anspruch 1, dadurch gekennzeichnet, daß der Fortsatz von einem Zentrierzylinder (12; 12') gebildet ist, für den werkzeugmaschinenseitig eine Zentrieraufnahme (18) einer Spindel (4; 4') vorgesehen ist, und daß auf Seiten des den Zentrierzylinder (12) tragenden Werkzeugsystemmoduls (2; 2') zumindest eine Ausnehmung (38) für zumindest eine an der Aufnahme (18) vorgesehene Mitnehmerklaue (42; 550; 580; 604; 622; 882; 950) vorgesehen ist.

3. Kupplungsvorrichtung nach Anspruch 1 oder 2, dadurch gekennzeichnet, daß die Planflächen (8, 14) über die die zu kuppelnden Teile aneinander preßbar sind, von Radialringflächen (14; 14A) gebildet sind.

4. Kupplungsvorrichtung nach einem der Ansprüche 1 bis 3, dadurch gekennzeichnet, daß das Keilgetriebe (22) einen radial innerhalb der Klauenabschnitte (26; 426; 726; 826; 926) liegenden und mit der Betätigungsstange (20) verbundenen Schubkörper (34; 434; 734; 834; 934) aufweist, der mit angepaßten Kontaktflächen (92) der Spannklauen in Berührungseingriff bringbar ist.

5. Kupplungsvorrichtung nach Anspruch 4, dadurch gekennzeichnet, daß der Schubkörper (34; 434; 734; 834; 934) am dem Werkzeugsystemmodul (2; 2') zugewandten Ende der Betätigungsstange (20) angebracht ist, deren zum Lösen der Kupplung vorgesehener Hub an das Eintauchmaß der Klauenabschnitte (26; 426; 726; 826; 926) in die nutartige Ausnehmung (36) und an die Keilwinkelgestaltung (434A, 434B) des Schubkonus angepaßt ist.

6. Kupplungsvorrichtung nach einem der Ansprüche 1 bis 5, dadurch gekennzeichnet, daß die Betätigungsstange (20) zumindest beim Spannvorgang (20) ein radiales Spiel im werkzeugmaschinenseitigen Kupplungsteil (4; 4') hat.

7. Kupplungsvorrichtung nach einem der Ansprüche 1 bis 6, dadurch gekennzeichnet, daß die Stütznut derart an die Gestaltung der Endabschnitte angepaßt ist, daß die Spannklauen unter Beibehaltung des Eingriffs in die Stütznut mit ihren Klauenabschnitten in die nutartige Ausnehmung (36) des Zentrierzylinders (12; 12') und aus dieser heraus schwenkbar sind.

8. Kupplungsvorrichtung nach einem der Ansprüche 4 bis 7, dadurch gekennzeichnet, daß der Schubkörper (34; 434; 734; 834; 934) auf der dem Werkzeugsystemmodul (2; 2) abgewandten Seite einen zylinderförmigen Kopplungsansatz (100; 500; 800; 900; 1000) hat, über den er mit der Betätigungsstange (20) verbindbar, vorzugsweise verschraubbar ist.

9. Kupplungsvorrichtung nach einem der Ansprüche 4 bis 8, dadurch gekennzeichnet, daß der Schubkörper (34; 434; 834) auf der der Betätigungsstange (20) abgewandten Seite einen hohlzylinderförmigen Fortsatz (112; 512, 912) trägt, der abdichtend in eine koaxiale Ausnehmung (114; 514, 515; 914, 915) im Werkzeugsystemmodul (2) einführbar ist.

10. Kupplungsvorrichtung nach einem der Ansprüche 2 bis 9, dadurch gekennzeichnet, daß die Zentrieraufnahme (18) im Eingriffsbereich des Zentrierzylinders (12', 12) von einem Zentrierring (140; 560; 590; 630; 880; 960) gebildet ist, der gegebenenfalls radial einstellbar an der Spindel (4', 4) festgelegt ist und vorzugsweise aus verschleißfestem Werkstoff, wie z.B. Hartmetall oder gehärtetem Stahl besteht.

11. Kupplungsvorrichtung nach einem der Ansprüche 1 bis 10, gekennzeichnet durch ein vorzugsweise von Druckluft versorgtes Spülkanalsystem (300 bis 326; 570 bis 576; 586 bis 589; 596, 599; 604 bis 608; 886 bis 890; 956 bis 960) zur Reinigung der in Eingriff bringbaren Funktionsoberflächen an den zu kuppelnden Bestandteilen der Kupplungsvorrichtung.

12. Kupplungsvorrichtung nach Anspruch 11, dadurch gekennzeichnet, daß die Planflächen über die die zu kuppelnden Teile aneinander preßbar sind, auf Seiten des Werkzeugsystemmoduls von einer Radialringfläche (8) und auf Seiten der Spindel (4) von Radialringflächensegmenten (14A) oder -abschnitten gebildet sind, die vorzugsweise durch diametral verlaufende Nuten (324) voneinander getrennt sind und jeweils zumindest eine Mündungsöffnung (322) von Druckluft-Spülkanälen (320; 574; 586; 596; 608; 960) aufweisen.

13. Kupplungsvorrichtung nach einem der Ansprüche 7 bis 12, dadurch gekennzeichnet, daß die Spannklauen (24) in radialer Richtung in Axialnuten (70) eines Führungskörpers (64) geführt sind, der mit dem werkzeugmaschinenseitigen Teil der Kupplungsvorrichtung fest verbindbar ist und vorzugsweise den Mitnahmering (44) gegen die Radialschulter (50) in der Zentrieraufnahme (18) drückt.

14. Kupplungsvorrichtung nach Anspruch 13, dadurch gekennzeichnet, daß der Mitnahmering (44) im Bereich des Mitnahmefortsatzes (52) mit dem Führungskörper (64) einen zu den Spannklauen (24) abgedichteten mit Druckluft versorgbaren Ringraum (314) definiert, von dem vorzugsweise drei im Umfang gleichmäßig verteilte Stichkanäle (314) nach außen laufen, die in jeweils einer Längsnut (316) auf der Außenseite des Mitnahmerings (44) münden, die mit einem Ringraum (318) zur Versorgung der Druckluft-Spülkanäle (320) in Strömungsverbindung stehen.

15. Kupplungsvorrichtung nach einem der Ansprüche 11 bis 14, dadurch gekennzeichnet, daß der Schubkonus (34) auf der dem Werkzeugsystemmodul (2) abgewandten Seite einen zylinderförmigen Kopplungsansatz (100) hat, über den er mit der Betätigungsstange (20) verbindbar, vorzugsweise verschraubbar ist und daß der Kopplungsansatz (100) auf seiner Außenseite Längsausnehmungen (306) hat, um zwischen ihm und der zylindrischen Innenoberfläche des Führungskörpers (64) einen weiteren Spülkanal zu definieren, der über einen Zwischenaum (304) zwischen Zugstange (20) und Führungskörper (64) gespeist und zu den Klauenabschnitten (26) der Spannklauen (24) hin offen ist.

16. Kupplungsvorrichtung nach einem der Ansprüche 13 bis 15, dadurch gekennzeichnet, daß die zylindrische Innenoberfläche des Führungskörpers (64) eine Ringnut (96) zur Aufnahme eines in radialer Richtung elastischen Ringes (98) hat, über den der Schubkonus (34) radial stabilisierbar ist.

17. Kupplungsvorrichtung nach einem der Ansprüche 7 bis 16, dadurch gekennzeichnet, daß die Spannklauen (24; 424; 824) von einem elastischen Ring (118; 118'; 526; 829) nach innen vorgespannt sind, wobei der Ring vorzugsweise in einer dem Klauenabschnitt (26) benachbarten Rille (128) aufgenommen ist.

18. Kupplungsvorrichtung nach einem der Ansprüche 7 bis 1@, dadurch gekennzeichnet, daß die Stütznut (474; 774; 874; 974) in einer Werkzeugmaschinenspindel (4) ausgebildet ist.

19. Kupplungsvorrichtung nach einem der Ansprüche 7 bis 11 oder 17, gekennzeichnet durch eine Vorzentrierungseinrichtung (412; 401, 501, 513, 514) für das anzukoppelnde Teil des Werkzeugsystemmoduls (2), vorzugsweise einen am Stirnende des Zentrierzylinders (12) und/oder am Schubkörper ausgebildeten balligen Oberflächenabschnitt (412, 513) aufweist, der vorzugsweise sphärisch mit einem Durchmesser ausgestaltet ist, der geringfügig kleiner ist als der Durchmesser der Zylinderpassungsflächen (10, 16; 514).

20. Kupplungsvorrichtung nach einem der Ansprüche 8 bis 19, dadurch gekennzeichnet, daß der Kopplungsansatz (500; 800; 900; 1000) eine Einrichtung (435; 746; 827; 945; 948) zur seitlichen Stabilisierung der Spannklauen (424; 724; 824; 924) trägt, die vorzugsweise entweder von im gleichmäßigen Umfangsabstand angeordneten Vorsprüngen (435) auf der Außenseite des Kopplungsansatzes (500) oder von einer Vielzahl von Radialschlitzen (747; 827; 947) gebildet ist, in die mit Passung Führungsabschnitte (725; 825; 925) der Spannklauen eingreifen und die vorzugsweise entweder im Kopplungsansatz (900) oder in einem Druckkörper (746), der über eine Federeinrichtung (748) gegen eine Steuerfläche (750) der Spannklauen drückt, um deren Klauenabschnitte im gelösten Zustand der Kupplungsvorrichtung aus der nutartigen Ausnehmung (36) zu schwenken, oder in einem Stabilisierungskörper (946) ausgebildet sind, der sich hinter den Spannklauen (924) befindet und in den ein nockenartiger Fortsatz (925) der Spannklaue ragt, für den im Kopplungsansatz (1000) eine Steuerfläche (948, 945) vorgesehen ist, um im entkoppelten Zustand der Kupplungsvorrichtung ein Zwangsverschwenken der Klauenabschnitte (926) aus der nutartigen Ausnehmung zu bewirken.

21. Kupplungsvorrichtung nach einem der Ansprüche 5 bis 20, dadurch gekennzeichnet, daß am Schubkonus zwei im Winkel zueinander stehende Schubkonusflächen (434A; 434B) ausgebildet sind, von denen die vom Werkzeugsystemmodul (2) entferntere Schubkonusfläche (434A) einen größeren Winkel mit der Mittelachse der Kupplungsvorrichtung einschließt als die andere Schubkonusfläche (434B).

22. Kupplungsvorrichtung nach einem der Ansprüche 1 bis 21, **dadurch gekennzeichnet, daß** die Spannklauen (24) die Stoßstelle zwischen den zu koppelnden Teilen (2, 4) klammerartig überbrücken.

23. Kupplungsvorrichtung nach einem der Ansprüche 1 bis 22, **dadurch gekennzeichnet, daß** der Klauenabschnitt auf seiner Außenseite mit einer Konusfläche (86) versehen ist, die beim Spannvorgang in flächigen Anlagekontakt mit einer Flanke (88) der nutartigen Ausnehmung (36) im Zentrierzylinder (12) bringbar ist.

24. Kupplungsvorrichtung nach einem der Ansprüche 1 bis 23, **dadurch gekennzeichnet, daß** über die Neigung einer Konusfläche (86) des Klauenabschnitts (26; 426; 726; 826; 926) und/oder durch die Gestaltung eines Schubkonus (34) des Keilgetriebes im Zusammenwirken mit einer zugehörigen Stützfläche (92) auf seiten der Spannklauen (24) eine zweistufige übersetzung einer in axialer Richtung eingeleiteten Zugkraft der Betätigungsstange (20) erfolgt, wodurch sich eine mehrfach übersetzte axiale Andruckkraft der zu koppelnden Komponenten (8, 14) ergibt.

25. Kupplungsvorrichtung nach einem der Ansprüche 1 bis 24, **dadurch gekennzeichnet, daß** die Stütznut (74) in einem in der Zentrieraufnahme (18) eingesetzten, die Umfangskräfte auf das Werkzeugsystemmodul (2; 2') übertragenden Mitnahmering (44) ausgebildet ist, der vorzugsweise zwei diametral angeordnete Mitnehmerklauen (42) trägt, deren Symmetrieebene (E_s) mit einer von drei Axialebenen (E_A) durch Kanten (13) eines Mitnahmefortsatzes (52) einen Winkel von 30° einschließt.

26. Kupplungsvorrichtung nach einem der Ansprüche 1 bis 25, **dadurch gekennzeichnet, daß** die Geometrien auf seiten des Klauenabschnitts (26; 426; 726; 826; 926), der nutartigen Ausnehmungen (36) des Fortsatzes (12; 12'), der dem Klauenabschnitt entgegensetzten Endabschnitte (30; 430; 730; 830; 930) und der Stütznut (74; 474; 774; 874; 974) der Aufnahme (18) derart aufeinander abgestimmt sind, daß zumindest im gespannten Zustand eine flächige Anlage sowohl des hakenförmigen Endabschnitts (30) als auch des Klauenabschnitts (26) an den jeweiligen Gegenflächen (76 bzw. 36) erfolgt.

27. Kupplungsvorrichtung nach einem der Ansprüche 1 bis 26, **dadurch gekennzeichnet, daß** die Betätigungsstange (20) zusammen mit einem darauf sitzenden Schubkonusteil (434) bei Aufbringung der Spannkraft frei schwimmend in der Handhabungseinrichtung, insbesondere einer Werkzeugspindel (4) gelagert ist, so daß eine Zwangszentrierung des Schubkonusteils (434) vorzugsweise zu Beginn der Preßkrafterzeugung aufgehoben ist.

## Claims

1. A coupling system between a workpiece or a tool carrier element, such as, for example, a tool system module, for example in the form of a tool receptacle, and a manipulator system, such as, for example, a machine tool, with a receptacle on the machine tool side for an extension of the tool system module and a clamping system to generate a contact force between plane surfaces of the elements that are to be coupled, wherein the clamping system has an operating rod, by means of which a wedge drive can be operated, with which the clamping elements that are provided in one of the parts that are to be coupled can be pressed essentially radially outwards into a suitably configured recss on the other element that is to be coupled, characterized in that said clamping elements are formed by at least three clamp-like clamp claws (24; 424; 724; 824; 924) that are arranged essentially parallel to the extension (12; 12') of the tool system module (2; 2') and can be pressed, while being supported in a recess (18) with a claw section (26; 426; 726; 826; 926) that in the coupled state lies radially inwards within said extension (12; 12'), in a groove-like recess (36) of the extension (12; 12'), while gripping with their end portions (30; 430; 730; 830; 930) opposite to the respective claw sections into a support groove (74; 474; 774; 874; 974) of said recess (18).

2. A coupling system as defined in claim 1, characterized in that the extension is formed by a centering cylinder (12; 12') for which, on the machine tool side, there is a centering recess (18) of a spindle (4; 4'); and wherein on the sides of the tool system module (2; 2') that bears the centering cylinder (12) there is at least one recess (38) for at least one driver claw (42; 550; 580; 604; 622; 882; 950) on the recess (18).

3. A coupling system as defined in claim 1 or claim 2, characterized in that the plane surfaces (8, 14) through which the elements that are to be coupled to each other can be pressed together are formed by radial annular surfaces (14; 14A).

4. A coupling system as defined in one of the claims 1 to 3, characterized in that the wedge drive (22) has a thrust body (34; 434; 734; 834; 934) that lies within the claw sections (26; 426; 726; 826; 926) and which is connected with the operating rod (20), that can be brought into contact with the matched contact surfaces (92) of the clamp claws.

5. A coupling system as defined in claim 4, characterized in that the thrust body (34; 434; 734; 834; 9334) is attached on the end of the operating rod (20) that is proximate to the tool system module (2; 2') the stroke of which that is required to release the coupling is matched to the isertion dimension of the claw sections (26; 426; 726; 826; 926) in the groove-like recess (36) and the configuration of the wedge angle (434A, 434B) of the thrust cone.

6. A coupling system as defined in one of the claims 1 to 5, characterized in that the operating rod (20) has some radial clearance in the coupling element (4; 4') on the machine tool side, at least during the clamping process operating step.

7. A coupling system as defined in one of the claims 1 to 6, characterized in that said supporting groove is matched to the configuration of the end sections such that the claw sections of the clamp claws can pivot into and out of the groove-like recess (36) of the centering cylinder (12; 12') whilst remaining in engagement in the supporting groove.

8. A coupling system as defined in one of the claims 4 to 7, characterized in that the thrust body (34; 434; 734; 834; 934) has a cylinder shaped coupling extension (100; 500; 800; 900; 1000) on the side that is remote from the tool system module (2; 2') through which it can be connected with the operating rod (20), preferably by a screw connection.

9. A coupling system as defined in one of the claims 4 to 8, characterized in that the thrust body (34; 434; 834) has a hollow cylindrical extension (112; 512; 912) on the side that is remote from the operating rod (20), which can be inserted so as to be sealed in a coaxial recess (114; 514; 515; 914; 915) in the tool system module (2).

10. A coupling system as defined in one of the claims 2 to 9, wherein the centering recess (18) in the engagement area of the centering cylinder (12; 12') is formed by a centering ring (140; 560; 590; 630; 880; 960) which is optionally secured on the spindle (4; 4') so as to be radially adjustable and preferably.

11. A coupling system as defined in one of the claims 1 to 10, characterized by a flushing channel system supplied preferably with compressed air (30 to 326; 570 to 576; 586 to 589; 596, 599; 604 to 608; 886 to 890; 956 to 960) to clean the functional surfaces on the elements of the coupling system that are to be connected which are to be brought into engagement with each other.

12. A coupling system as defined in claim 11, wherein the plane surfaces by which the parts that are to be coupled together can be pressed against each other, are formed on the sides of the tool system module by a radial annular surface (8) and on the side of the spindle (4) by radial annular surface segments (14A) or sections, that are preferably separated from each other by diametrically extending grooves (324), each of which has at least one opening (322) of the compressed air flushing channels (320; 574; 586; 596; 608; 960).

13. A coupling system as defined in one of the claims 7 to 12, characterized in that the clamp claws (24) are guided in a radial direction in axial grooves (70) of a guide body (64) that can be connected rigidly with the portion of the coupling system on the machine tool side and preferably presses the driver ring (44) against the radial shoulder (50) in the centering recess (18).

14. A coupling system as defined in claim 13, wherein the driver ring (44) in the area of the driver extension (52) defines an annular space (314) that is sealed against the clamp claws (24) and which is supplied with compressed air, and from which preferably three side cuts (314) that are distributed equidistantly about the periphery extend outwards, each of which opens out into a longitudinal groove (316) on the outer side of the driver ring (44) and which are connected with an annular space (318) for supplying the compressed air flushing channels (320).

15. A coupling system as defined in one of the claims 11 to 14, characterized in that the thrust cone (34) has a cylindrical coupling collar (100) on the side that is remote from the tool system module (2), through which it can be connected to the operating rod (20), preferably by screw connection and wherein the coupling collar (100) has longitudinal recesses (306) on its outer side, in order to define an additional flushing channel between it and the cylindrical inner surface of the guide body (64), this being supplied through an intermediate space (304) between the draw bar (20) and the guide body (64) and which is open towards the claw sections (26) of the clamping claws (24).

16. A coupling system as defined in one of the claims 13 to 15, wherein the cylindrical inner surface of the guide body (64) has an annular groove (96) to accommodate a ring (98) that is elastic in a radial direction, by which the thrust cone (34) can be stabilized radially.

17. A coupling system as defined in one of the claims 7 to 16, wherein the clamping claws (24; 424; 824) are tensioned towards the inside by means of an elastic ring (118; 118'; 526; 829) the ring preferably being accommodated in a groove (128) that is adjacent to the claw section (26).

18. A coupling system as defined in one of the claims 7 to 12, wherein the supporting groove (474; 774; 874; 974) is formed in a machine tool spindle (4).

19. A coupling system as defined in one of the claims 7 to 11 or 17, characterized by a precentering system (412; 401; 501; 513; 514) for the part of the tool system module (2) that is to be coupled, which system preferably has a rounded surface section (412; 513) at the face end of the centering cylinder (12) and/or on the thrust body, said section being preferably spherical with a diameter that is slightly smaller that the diameter of the cylinder precision surfaces (10, 16; 514).

20. A coupling system as defined in one of the claims 8 to 19, characterized in that the coupling collar (500; 800; 900; 1000) supports a device (435; 746; 827; 945; 948) for the lateral stabilization of the clamping claws (424; 724; 824; 924), wherein the stabilizing system preferably is formed either from projections (435) on the outer side of the coupling collar (500), these being arranged equidistantly about the periphery, or from a plurality of radial slots (747; 847; 947) in which guide sections (725; 825; 925) of the clamping claws engage with some clearance and which radial slots (827) are preferably formed either in the coupling collar (900), or in a pressure body (746) that presses against the control surface (750) of the clamping claws through a spring system (748) in order to pivot its claw sections out of the groove-like recess (36) in the release state, or in a stabilizing body (946), that is located behind the clamp claws (924) and into which a cam-like extension (925) of the span claws protrudes, for which a control surface (948, 945) is provided in the coupling collar (1000) in order to bring about a positive pivoting of the claw sections (926) out of the groove-like recess when the coupling system is uncoupled.

21. A coupling system as defined in one of the claims 5 to 20, characterized in that two thrust cone surfaces (434A; 434B) that form an angle are arranged on the thrust cone, of which the thrust cone surface ((434A) that is remote from the tool system module (2) subtends a greater angle with the central axis of the coupling system than the other thrust cone surface (434B).

22. A coupling system according to one of the claims 1 to 21, characterized in that said clamp claws (24) bridge the butt contact area between the parts to be coupled in a clip-like manner.

23. A coupling system according to one of the claims 1 to 22, characterized in that said claw section on its outer surface side has a cone surface (86) which during the clamping mode or operation can be brought in surface-to-surface contact with a flank (88) of the groove-like recess (36) in said centering cylinder (12).

24. A coupling system according to one of the claims 1 to 23, characterized in that by means of the slope or inclination of a cone surface (86) of said claw section (26; 426; 726; 826; 926) and/or by the design of a thrust cone (34) of said wedge drive in cooperation with a corresponding support surface (92) at said clamp claws (24) a two-step amplification of a claw force of said actuating rod (20) induced in axial direction is effected, whereby a multiply amplified axial compression force between said components (8, 14) to be coupled is achieved.

25. A coupling device according to one of the claims 1 to 24, characterized in that said support groove (74) is performed in a drive ring (44) which is inserted in a centering recess (18) or receptacle (18) and which transmits circumferential forces to said tool system module (2; 2'), said drive ring (44) having preferably two diametrically opposed drive claws (42), the plane of symmetry ($E_s$) thereof forming with one of three axial planes ($E_A$) through edges (13) of a drive extension (52) an angle of 30°.

26. A coupling system according to one of the claims 1 to 25, characterized in that the geometries on the side of claw section (26; 426; 726; 826; 926), of the groove-like recesses (36) of said extension (12; 12'), of said end portions (30; 430; 730; 830; 930) opposite to said claw section and of said support groove (74; 474; 774; 874; 974) in said recess are matched with one another in such a way that at least in the coupled state a surface-to-surface abuttment in the area of the hook-like end section (30) as well as in the area of the claw section (26) at the respective countersurfaces (76 and 36, respectively) occurs.

27. A coupling system according to one of the claims 1 to 26, characterized in that said actuating rod (20) together with a thrust cone part (434) mounted thereon when inducing the clamping force is supported in a free floating manner in said manipulator system, in particular within a machine tool spindle (4), so that a forced centering of said thrust cone part (434) preferably at the beginning of the generation of the pressing force is eliminated.

**Revendications**

1. Dispositif d'accouplement entre d'une part une partie support d'outil ou de pièce à usiner, comme par exemple un module d'un système d'outils, par exemple sous forme d'un porte-outil de base, et d'autre part un dispositif de maniement, comme par exemple une machine-outil, comprenant un organe de réception du côté de la machine-outil pour un prolongement du module de système d'outils, un dispositif de serrage pour produire une force de pression entre des surfaces planes des pièces à assembler, le dispositif de serrage présentant une tige d'actionnement par laquelle un mécanisme à coin est actionnable, au moyen de laquelle au moins trois éléments de serrage disposés à égale distance l'un de l'autre et prévus sur l'une des pièces à accoupler sont susceptibles d'être pressés de façon essentiellement radiale vers l'extérieur, dans un creux agencé de façon correspondante dans l'autre pièce à accoupler,

caractérisé en ce que les éléments de serrage sont constitués de griffes de serrage (24; 424; 724; 824; 924) en forme de crampons, qui sont disposées sensiblement parallèlement au prolongement (12; 12') du module du système d'outils (2; 2') et qui, tout en s'appuyant dans l'organe de réception (18), peuvent, par une partie de griffe (26; 426; 726; 826; 926) se trouvant, à l'état accouplé, radialement à l'intérieur du prolongement (12; 12'), être pressés dans une cavité (36) en forme de rainure du prolongement (12; 12'), tout en s'engageant par leur partie d'extrémité (30; 430; 730; 830; 930) opposée à la partie de griffe dans une rainure d'appui (74; 474; 774; 874; 974) de l'organe de réception (18).

2. Dispositif d'accouplement selon la revendication 1, caractérisé en ce que le prolongement est constitué d'un cylindre de centrage (12; 12'), pour lequel est prévu du côté de la machine-outil un organe de réception de centrage (18) pour un arbre (4; 4'), et en ce qu'il comprend du côté du module du système d'outils (2; 2') portant le cylindre de centrage (12), au moins une cavité (38) destinée à recevoir au moins une patte d'entraînement (42; 550; 580; 604; 622; 882; 950) prévue sur niveau de l'organe de réception (18).

3. Dispositif d'accouplement selon la revendication 1 ou 2, caractérisé en ce que les surfaces planes (8, 14) par lesquelles les parties à accoupler peuvent être pressées l'une contre l'autre sont constituées de surfaces annulaires radiales (14; 14A).

4. Dispositif d'accouplement selon l'une des revendications 1 à 3, caractérisé en ce que la clavette d'engagement (22) présente un corps de poussée (34; 434; 734; 834; 934) se trouvant radialement à l'intérieur des parties de griffe (26; 426; 726; 826; 926) et relié à la tige d'actionnement (20), ce corps de poussée pouvant être amené en contact avec des surfaces de contact (92) adaptées des griffes de serrage.

5. Dispositif d'accouplement selon la revendication 4, caractérisé en ce que le corps de poussée (34; 434; 734; 834; 934) est disposé à l'extrémité de la tige d'actionnement (20) faisant face au module du système d'outils (2; 23'), la course de celle-ci pour le désaccouplement étant adaptée à la profondeur d'enfoncement des parties de griffe (26; 426; 726; 826; 926) dans la cavité (36) en forme de rainure, et à la disposition de l'angle (434A; 434B) du cône de poussée.

**6.** Dispositif d'accouplement selon l'une des revendications 1 à 5, caractérisé en ce que la tige d'actionnement (20) possède au moins pendant l'opération de serrage (20) un jeu radial dans la partie d'accouplement (4; 4') du côté de la machine-outil.

**7.** Dispositif d'accouplement selon l'une des revendications 1 à 6, caractérisé en ce que la rainure d'appui est adaptée à la forme de la partie extrémale de sorte que les griffes de serrage puissent, tout en gardant l'engagement dans la rainure d'appui, pivoter de façon à amener leur partie de griffe dans ou en-dehors de la cavité en forme de rainure (36) du cylindre de centrage (12; 12').

**8.** Dispositif d'accouplement selon l'une des revendications 4 à 7, caractérisé en ce que le corps de poussée (34; 434; 734; 834; 934) présente sur sa face opposée du module du système d'outils (2; 2') une saillie de couplage cylindrique (100; 500; 800; 900; 1000), par laquelle il peut être raccordé à la tige d'actionnement (20), de préférence par vissage.

**9.** Dispositif d'accouplement selon l'une des revendications 4 à 8, caractérisé en ce que le corps de poussée (34; 434; 834) porte du côté opposé à la tige d'actionnement (20) un prolongement (112; 512; 912) cylindrique creux qui peut être introduit, de façon étanche, dans une cavité coaxiale (114; 514, 515; 914, 915) du module du système d'outils (2).

**10.** Dispositif d'accouplement selon l'une des revendications 2 à 9, caractérisé en ce que l'organe de réception de centrage (18) est constitué dans la zone de contact du cylindre de centrage (12; 12') d'un anneau de centrage (140; 560; 690; 630; 880; 960), qui est fixé sur l'arbre (4', 4) le cas échéant, de façon réglable radialement et qui se compose de préférence d'un matériau résistant à l'usure comme par exemple un métal dur ou de l'acier trempé.

**11.** Dispositif d'accouplement selon l'une des revendications 1 à 10, caractérisé en ce qu'il comprend un système de canal de balayage (300 à 326; 570 à 576; 586 à 589; 596, 599; 604 à 608; 886 à 890; 956 à 960) de préférence à air comprimé, pour le nettoyage des surfaces fonctionnelles pouvant être amenées en contact sur les parties à accoupler du dispositif d'accouplement.

**12.** Dispositif d'accouplement selon la revendication 11, caractérisé en ce que les surfaces planes par lesquelles les parties à accoupler pouvant être appuyées l'une contre l'autre sont constituées du côté du module du système d'outils par une surface annulaire radiale (8), et du côté de l'arbre (4) par des segments ou parties (14A) de surface radiale annulaire, qui sont de préférence mutuellement séparés par des rainures s'étendant diamétralement (324) et qui présentent chacun au minimum une ouverture (322) de canal de balayage à air comprimé (320; 574; 586; 596; 608; 960).

**13.** Dispositif d'accouplement selon l'une des revendications 7 à 12, caractérisé en ce que les griffes de serrage (24) sont, dans la direction radiale, guidées dans des rainures axiales (70) d'un corps de guidage (64), qui peut être lié fixement à la partie du dispositif d'accouplement située du côté de la machine-outil, et qui pousse de préférence l'anneau d'engagement (44) contre l'épaulement radial (50) de l'organe de réception de centrage (18).

**14.** Dispositif d'accouplement selon la revendication 13, caractérisé en ce que l'anneau d'engagement (44) dans la zone du prolongement d'engagement (52) définit avec le corps de guidage (64) un espace annulaire (310) étanchéifié du côté des griffes de serrage pouvant être alimenté en air comprimé, à partir duquel de préférence trois canaux minces (314) répartis régulièrement sur le périmètre s'étendent vers l'extérieur, débouchent chacun dans une rainure longitudinale (316) sur la face extérieure de l'anneau d'engagement (44), et sont en liaison pour l'écoulement avec un espace annulaire (318) pour l'alimentation des canaux de balayage (320) à air comprimé.

**15.** Dispositif d'accouplement selon l'une des revendications 11 à 14, caractérisé en ce que le cône de poussée (34) présente sur le côté opposé au module du système d'outils (2) une saillie de couplage (100) cylindrique, par laquelle il peut être assemblé à la tige d'actionnement (20), de préférence par vissage, et en ce que la saillie de couplage (100) présente sur sa face externe des gorges longitudinales (306) de façon à définir entre elle-même et la surface intérieure cylindrique du corps de guidage (64) un canal de balayage supplémentaire, qui est alimenté par un espace intermédiaire (304) entre la tige d'actionnement (20) et le corps de guidage (64) et qui s'ouvre sur les parties de griffe (26) des griffes de serrage (24).

**16.** Dispositif d'accouplement selon l'une des revendications 13 à 15, caractérisé en ce que la surface cylindrique intérieure du corps de guidage (64) présente une rainure annulaire (96) destinée à recevoir un anneau (98) radialement élastique, sur lequel le cône de poussée (34) peut être stabilisé radialement.

17. Dispositif d'accouplement selon l'une des revendications 7 à 16, caractérisé en ce que les griffes de serrage (24; 424; 824) sont fixées vers l'intérieur par un anneau élastique (126; 526; 829), l'anneau étant disposé de préférence dans une gorge (128) proche de la partie de griffe (26).

18. Dispositif d'accouplement selon l'une des revendications 7 à 11, caractérisé en ce que la rainure d'appui (474; 774; 874; 974) se trouve sur l'arbre (4) d'une machine-outil.

19. Dispositif d'accouplement selon l'une des revendications 7 à 11 ou selon la revendication 17, caractérisé en ce qu'elle comprend un dispositif de pré-centrage (412; 401, 501, 513, 514) pour la partie à accoupler du module de système d'outils (2), qui présente de préférence une partie de surface (412; 513) convexe disposée à l'extrémité du cylindre de centrage (12) et/ou sur le corps de poussée, et qui est de préférence sphérique avec un diamètre légèrement inférieur à celui de la surface d'emmanchement du cylindre (10, 16; 514).

20. Dispositif d'accouplement selon l'une des revendications 8 à 19, caractérisé en ce que la saillie de couplage (500; 800; 900; 1000) comprend un dispositif (435; 746; 827; 945; 948) de stabilisation latérale des griffes de serrage (424; 724; 824; 924) qui est constitué de préférence soit par des saillies (435) disposées à égale distance sur le périmètre sur la surface extérieure de la saillie de couplage (500), soit d'une pluralité de fentes radiales (747; 827; 947), dans lesquelles des parties de guidage (725; 825; 925) des griffes de serrage s'engagent avec ajustement, et qui sont ménagées de préférence soit dans la saillie de couplage (900), soit dans un corps de poussée (746) appuyant, via un dispositif à ressort (748) sur un plan de commande (750) des griffes de serrage, de façon à faire tourner dans l'état de desserrage du dispositif d'accouplement les parties de griffe en-dehors du creux (36) en forme de rainure, ou encore qui sont ménagées dans un corps de stabilisation (946) qui se trouve derrière les griffes de serrage (924) et dans lequel s'engage un prolongement (925), en forme de came, de la griffe de serrage, prolongement pour lequel est prévu sur la saillie de couplage (1000) un plan de guidage (948, 945), de façon à assurer dans l'état désaccouplé du dispositif d'accouplement un basculement forcé des parties de griffe (926) endehors du creux en forme de rainure.

21. Dispositif d'accouplement selon l'une des revendications 5 à 20, caractérisé en ce qu'il comprend sur le cône de poussée deux surfaces de cône de poussée (434A; 434B) angulairement décalées, la surface du cône de poussée (434A) éloignée du module du système d'outils (2) formant avec l'axe du dispositif d'accouplement un angle plus important que l'autre surface du cône de poussée (434B).

22. Dispositif d'accouplement selon l'une des revendications 1 à 21, caractérisé en ce que les griffes de serrage (24) s'étendent au-dessus de la surface de butée entre les pièces à coupler (2, 4), à la façon d'un crampon.

23. Dispositif d'accouplement selon l'une des revendications 1 à 22, caractérisé en ce que la partie de griffe est pourvue sur sa surface extérieure d'une surface conique (86), qui penant le processus de serrage peut entrer en contact plan avec un flanc (88) de la cavité (36) en forme de rainure du cylindre de centrage (12).

24. Dispositif d'accouplement selon l'une des revendications 1 à 23, caractérisé en ce que, à cause de l'inclinaison d'une surface conique (86) sur la partie de griffe (26; 426; 726; 826; 926) et/ou de la forme d'un cône de poussée (34) du mécanisme à coin, en coopération avec une surface d'appui correspondante du côté de la griffe de serrage (24), on assure une transmission en deux étapes d'une force de traction axiale sur la tige d'actionnement, de sorte que l'on obtient une force de serrage axiale multipliée plusieurs fois entre les éléments à coupler (8, 14).

25. Dispositif d'accouplement selon l'une des revendications 1 à 24, caractérisé en ce que la rainure d'appui (74) est ménagée dans un anneau d'engagement (44) placé dans l'organe de réception de centrage (18) et qui transmet les forces périphériques vers le module du système d'outils (2, 2'), cet anneau comportant de préférence deux griffes d'engagement (42) diamétralement opposées, dont le plan de symétrie ($E_s$) forme un angle de 30° avec l'un de trois plans axiaux ($E_A$) passant par l'arête (130) d'une saillie d'engagement (52).

28

**26.** Dispositif d'accouplement selon l'une des revendications 1 à 25, caractérisé en ce que les formes des parties de griffe (26; 426; 726; 826; 926) de la cavité en forme de rainure (36) du prolongement (12; 12'), des parties d'extrémité (30; 430; 730; 830; 930) opposées aux parties de griffe, et de la rainure d'appui (74; 474; 774; 874; 974) de l'organe de réception (18) sont adaptées les unes aux autres, de sorte qu'au moins dans l'état de serrage, un contact plan avec les surfaces correspondantes (76 et 36) soit assuré pour les parties d'extrémité (30) en forme de crochet, et pour les parties de griffe (26).

**27.** Dispositif d'accouplement selon l'une des revendications 1 à 26, caractérisé en ce que la tige d'actionnement (20) ainsi qu'une partie du cône de poussée (434) qui s'y trouve monté, après application de la force de serrage, flotte librement dans le dispositif de maniement, en particulier dans l'arbre d'outil (4), de sorte à mettre fin à un centrage forcé de la partie de cône de poussée (434), de préférence au début de l'application de la force de serrage.

Fig.1

# Fig.2A

# Fig.2B

40

40

D 12

6

8

10

2

12

88

36

38

114

10

EP 0 291 048 B1

Fig.3B

Fig.3A

# Fig.4B

# Fig.4A

# Fig.4C

EP 0 291 048 B1

Fig.5A

Fig.5B

Fig.6B

Fig.6A

35

# F i g.7

# F i g.8

Fig.9

F i g.10

Fig.11

F i g.12

Fig.13

# Fig.14

EP 0 291 048 B1

# Fig.15

# F i g.16

# F i g.17

Fig.18B

Fig.18A

Fig.18C

56

58

$E_A$

30°

$E_S$

316

44

314 48

$E_S$

XVIII C

XVIII B

42

74

76

52

60 46

316

42

EP 0 291 048 B1

Fig. 19C
(XIXC)

Fig. 19A
(XIXA)

Fig. 19B
(D-E)

Fig. 19D
(XIXD)

EP 0 291 048 B1

# Fig.20C
## (XX C)

584 586

6

2

588

# Fig.20A
## (XX A)

XXB

589

580 426 526

430 401

4

515

513 434B 518 434A 434 424 435 500 403 20 120

# Fig.20B

XXC XXA

582 589

14A

586

586

589

EP 0 291 048 B1

Fig.21B

Fig.21A (XXI A)

Fig.21C (XXI C)

# Fig. 22 A

# Fig. 22 B

Fig. 23

Fig.24A

Fig.24B

Fig. 25B

Fig. 25B

Fig. 26A

Fig. 26B

EP 0 291 048 B1

## Fig. 27A

## Fig. 27B